# EUROPEAN PATENT APPLICATION

(11) **EP 4 502 808 A1**
(43) Date of publication of application: **05.02.2025**
(21) Application number: 22935107.7
(22) Date of filing: 29.03.2022
(51) Int. Cl.: G06F 9/54, G06F 15/173, G06N 10/80

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: KASAGI, Akihiko, Kawasaki-shi, Kanagawa 211-8588 (JP)
(74) Representative: Hoffmann Eitle
(86) International application number: PCT/JP2022/015272
(87) International publication number: WO 2023/187954

(57) **Abstract**

Efficiency of simulation of quantum calculation is improved.

An information processing device (10) detects a first quantum gate (4) including, as an operation object, a first qubit (7) that causes transmission and reception of state data between a plurality of calculation nodes (1a, 1b, ...) at the time of operation, based on a qubit number of a qubit to be operated by a quantum gate included in a first quantum circuit (2). Next, the information processing device (10) inserts, before the first quantum gate (4) of the first quantum circuit (2), a second quantum gate (5) indicating a swap operation between a state of a second qubit (8) to be operated by the first quantum gate (4) and a state of a third qubit (9) that may be operated without transmission and reception of the state data between the plurality of calculation nodes (1a, 1b, ...). Then, the information processing device (10) changes the operation object of the first quantum gate (4) from the second qubit (8) to the third qubit (9).

## Description

### TECHNICAL FIELD

The present invention relates to an information processing program, an information processing method, and an information processing device.

### BACKGROUND ART

There is a simulation technology for reproducing, in a classical computer, quantum calculation executed in a quantum computer based on a quantum circuit. Hereinafter, the classical computer that performs such simulation is referred to as a quantum gate simulator.

The quantum computer has a state where 0/1 is superposed by quantum superposition. The quantum gate simulator that reproduces this by the classical computer implements the simulation by holding data indicating all states that a quantum may have in a memory. In a case where the number of qubits to be simulated is n (n is a natural number), the quantum gate simulator stores data indicating 2ⁿ states in the memory. Furthermore, an amount of calculation by the quantum gate simulator also increases as the number of qubits increases.

The amount of calculation in the quantum calculation depends on a configuration of the quantum circuit. Thus, various technologies for optimizing the quantum circuit for a purpose of improving calculation efficiency and the like have been proposed.

### CITATION LIST

### PATENT DOCUMENT

Patent Document 1: Japanese National Publication of International Patent Application No. 2022-501731
Patent Document 2: Japanese National Publication of International Patent Application No. 2022-500776
Patent Document 3: U.S. Patent Application Publication No. 2021/0286601
Patent Document 4: U.S. Patent Application Publication No. 2020/0219003
Patent Document 5: U.S. Patent Application Publication No. 2021/0334081
Patent Document 6: U.S. Patent Application Publication No. 2020/0104747

### SUMMARY OF INVENTION

### TECHNICAL PROBLEM

When the number of qubits operated by the quantum circuit increases, it is difficult to implement the quantum gate simulator by one computer. Thus, the quantum gate simulator is implemented by a computer system in which a plurality of computers (calculation nodes) is operated in parallel. As the number of qubits increases, the number of pieces of data indicating the states of the quantum also increases, and thus the data is also stored in a distributed manner in memories of the respective plurality of calculation nodes.

In order to improve efficiency of parallel calculation at the plurality of calculation nodes, it is important to improve efficiency of calculation involving data communication between the calculation nodes. However, conventionally, improvement in efficiency of communication processing between the calculation nodes for the data stored in a distributed manner in the plurality of calculation nodes in the quantum gate simulator is insufficient. Therefore, simulation of the quantum calculation by the quantum gate simulator using the plurality of calculation nodes is inefficient.

In one aspect, an object of the present case is to improve efficiency of simulation of quantum calculation.

### SOLUTION TO PROBLEM

In one proposal, an information processing program for causing a computer to execute the following processing is provided.

The computer acquires a first quantum circuit to be simulated by a plurality of calculation nodes that performs simulation of quantum calculation. The computer detects a first quantum gate that includes, as an operation object, a first qubit that causes transmission and reception of state data for each combination of states of a respective plurality of qubits indicated in the first quantum circuit between the plurality of calculation nodes at a time of operation in a case where storage destinations of the state data are allocated to the plurality of calculation nodes based on qubit numbers of qubits to be operated by a quantum gate included in the first quantum circuit. The computer inserts, before the first quantum gate of the first quantum circuit, a second quantum gate that indicates a swap operation between a state of a second qubit to be operated by the first quantum gate and a state of a third qubit that is operatable without the transmission and reception of the state data between the plurality of calculation nodes. Then, the computer changes the operation object of the first quantum gate from the second qubit to the third qubit.

### ADVANTAGEOUS EFFECTS OF INVENTION

According to one aspect, efficiency of simulation of quantum calculation may be improved.

The object described above and other objects, features, and advantages of the present invention will become clear from the following description related to the appended drawings, which represent preferred embodiments as examples of the present invention.

### BRIEF DESCRIPTION OF DRAWINGS

FIG. 1 is a diagram illustrating an example of an information processing method according to a first embodiment.
FIG. 2 is a diagram illustrating an example of a system configuration.
FIG. 3 is a diagram illustrating an example of hardware of a control node.
FIG. 4 is a diagram illustrating an example of a hardware configuration of a calculation node.
FIG. 5 is a diagram illustrating an example of a function of each node for implementing a quantum gate simulator.
FIG. 6 is a diagram illustrating an example of distribution storage of state data.
FIG. 7 is a diagram illustrating an example of processing of changing a cross-node gate operation to an intra-node gate operation.
FIG. 8 is a diagram illustrating an example of a cross-node SWAP operation.
FIG. 9 is a diagram illustrating an example of combination processing of the SWAP operation.
FIG. 10 is a diagram illustrating an example of a correspondence relationship between "src" and "dst" by Fused_SWAP.
FIG. 11 is a diagram illustrating a first example of a method of calculating "dst" based on "src".
FIG. 12 is a diagram illustrating a second example of the method of calculating "dst" based on "src".
FIG. 13 is a diagram illustrating an example of Fused_SWAP in a case where another qubit is sandwiched between two qubit groups to be swapped.
FIG. 14 is a diagram illustrating a third example of the method of calculating "dst" based on "src".
FIG. 15 is a diagram (1/3) illustrating an example of a transmission procedure of the state data between calculation nodes by Fused_SWAP.
FIG. 16 is a diagram (2/3) illustrating an example of the transmission procedure of the state data between the calculation nodes by Fused_SWAP.
FIG. 17 is a diagram (3/3) illustrating an example of the transmission procedure of the state data between the calculation nodes by Fused_SWAP.
FIG. 18 is a diagram illustrating an example of a data transmission/reception method by a SWAP pair.
FIG. 19 is a diagram illustrating an example of data transmission by scatter/gather.
FIG. 20 is a diagram illustrating an example of Fused_SWAP in a case where a small value is selected as an inner-side qubit number.
FIG. 21 is a diagram illustrating an example of Fused_SWAP in a case where a large value is selected as the inner-side qubit number.
FIG. 22 is a diagram for describing a reason why the number of times of data communication increases by selecting the inner-side qubit number from a smaller value.
FIG. 23 is a diagram illustrating an example of a quantum circuit after optimization in a case where the inner-side qubit number is selected.
FIG. 24 is a diagram illustrating an example of a calculation principle of a communication pair by a bipartite graph.
FIG. 25 is a diagram illustrating a first example of exception handling of Fused_SWAP.
FIG. 26 is a diagram illustrating a second example of the exception handling of Fused_SWAP.
FIG. 27 is a flowchart illustrating an example of a processing procedure of quantum gate simulation by a quantum circuit to which Fused_SWAP is applied.
FIG. 28 is a flowchart illustrating an example of a procedure of quantum circuit optimization processing.
FIG. 29 is a flowchart illustrating an example of a processing procedure of the quantum gate simulation.

### DESCRIPTION OF EMBODIMENTS

Hereinafter, the present embodiments will be described with reference to the drawings. Note that each of the embodiments may be implemented in combination with the plurality of embodiments as long as no contradiction arises.

### [First Embodiment]

In a first embodiment, a quantum circuit is optimized to improve efficiency of communication between calculation nodes, and calculation efficiency of entire simulation of quantum calculation is improved.

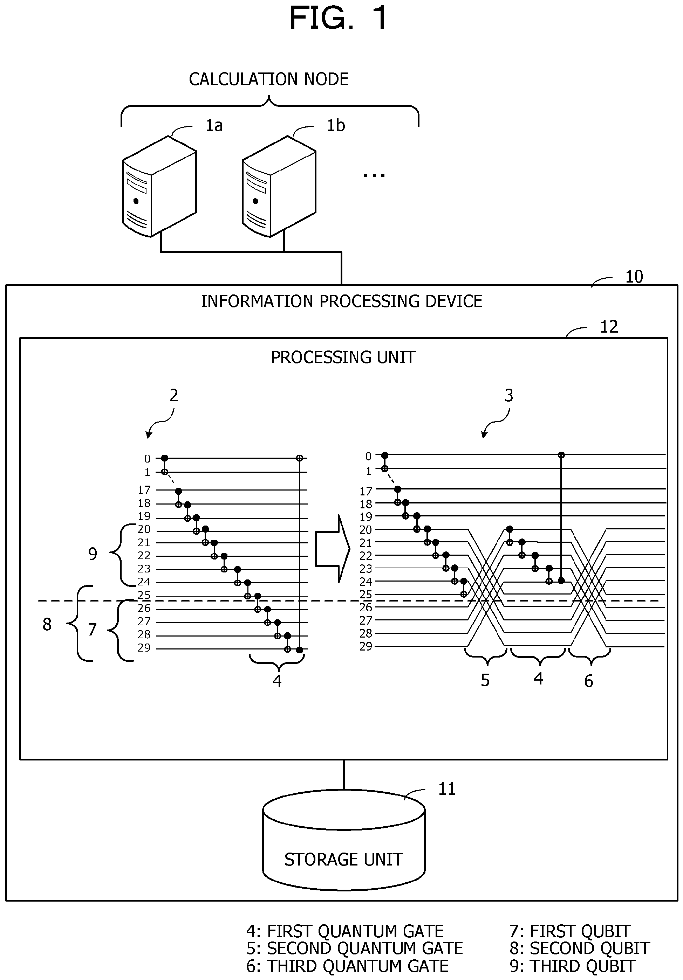

FIG. 1 is a diagram illustrating an example of an information processing method according to the first embodiment. In FIG. 1, an information processing device 10 for implementing the information processing method according to the first embodiment is illustrated. The information processing device 10 may implement the information processing method by, for example, executing a predetermined information processing program.

A plurality of calculation nodes 1a, 1b, ... is coupled to the information processing device 10. Each of the plurality of calculation nodes 1a, 1b, ... is a classical computer that performs simulation of quantum calculation. Note that, when the simulation of the quantum calculation is executed, storage destinations of state data for each combination of states of each of a plurality of qubits indicated in a first quantum circuit 2 is allocated to the plurality of calculation nodes 1a, 1b, ....

The information processing device 10 includes a storage unit 11 and a processing unit 12 in order to implement the information processing method. The storage unit 11 is, for example, a memory or a storage device included in the information processing device 10. The processing unit 12 is, for example, a processor or an arithmetic circuit included in the information processing device 10.

The storage unit 11 stores the first quantum circuit 2 to be simulated by the plurality of calculation nodes 1a, 1b, ..., and a second quantum circuit 3 obtained by optimizing the first quantum circuit 2.

The processing unit 12 acquires the first quantum circuit 2. Next, the processing unit 12 detects a first quantum gate 4 including a predetermined first qubit 7 as an operation object based on a qubit number of a qubit to be operated by a quantum gate included in the first quantum circuit 2. The first qubit 7 is a qubit that causes transmission and reception of the state data among the plurality of calculation nodes 1a, 1b, ... at the time of operation. Then, the processing unit 12 inserts a second quantum gate 5 before the first quantum gate 4 of the first quantum circuit 2. The second quantum gate 5 is a swap gate (SWAP gate) indicating a swap operation between a state of a second qubit 8 to be operated by the first quantum gate 4 and a state of a third qubit 9 that may be operated without transmission and reception of the state data among the plurality of calculation nodes 1a, 1b, ....

Furthermore, the processing unit 12 changes the operation object of the first quantum gate 4 from the second qubit 8 to the third qubit 9. Moreover, the processing unit 12 inserts a third quantum gate 6 indicating the same swap operation as the second quantum gate 5 after the first quantum gate 4 of the first quantum circuit 2.

In this manner, the optimized second quantum circuit 3 is generated. In the second quantum circuit 3, the operation object of the first quantum gate 4 is the third qubit 9. With this configuration, transmission and reception of the state data across the calculation nodes do not have to be generated in the quantum calculation according to the first quantum gate 4. In other words, it is sufficient for each of the plurality of calculation nodes 1a, 1b, ... to perform the quantum calculation according to the first quantum gate 4 and update the state data held by itself based on a calculation result. Thus, efficiency of the processing is improved.

Furthermore, the second quantum gate 5 and the third quantum gate 6 may be configured by one or more SWAP gates. In a case where a plurality of SWAP gates is continuous, an amount of data to be communicated may be reduced by performing replacement with an operation in which the plurality of SWAP gates is combined.

For example, a case is assumed where the respective qubit numbers of a plurality of the second qubits 8 to be operated by any one of the continuously detected first quantum gates 4 are continuous. In this case, the processing unit 12 determines a final transmission destination of transmission object state data to be transmitted in a case where swap operations corresponding to the respective first quantum gates 4 that are continuously detected are continuously performed. Then, the processing unit 12 inserts a function (Fused SWAP to be described later) instructing the plurality of calculation nodes 1a, 1b, ... to transmit the transmission object state data to the determined transmission destination as the second quantum gate before the plurality of first quantum gates. This function is a function for collectively executing calculation of the plurality of SWAP gates in the simulation of the quantum calculation.

In this manner, by causing processing of the plurality of SWAP gates to be collectively executed by one function, efficiency of the processing of the SWAP gates is improved, and an amount of data transmitted and received among the calculation nodes for SWAP is also reduced.

Furthermore, by appropriately allocating the state data to each of the calculation nodes 1a, 1b, ..., as illustrated in FIG. 1, a quantum gate that operates a qubit having a qubit number of a predetermined value or less may be easily detected as the first quantum gate.

For example, the processing unit 12 assigns an address including a bit string indicating the states of the plurality of qubits to the state data for each combination of the states. In the bit string of the address, a value indicating a state of a qubit having a smaller qubit number is allocated to a lower bit. Additionally, it is assumed that it is determined that state data groups having addresses in which a predetermined number of values of first bits from the top are common are stored in the same calculation node. In the example of FIG. 1, state data groups having addresses in which four bits (bits corresponding to qubit numbers "26" to "29") from the top are common are stored in the same calculation node. In this case, a quantum gate having a qubit corresponding to any one of the first bits of the address as an operation object is detected as the first quantum gate 4. In this manner, the detection of the first quantum gate 4 is facilitated.

In this manner, in a case where the state data groups having the addresses in which the predetermined number of the values of the first bits from the top are common are stored in the same calculation node, the processing unit 12 selects the third qubit 9 from among qubits having qubit numbers of a predetermined value or less. For example, the processing unit 12 selects a qubit corresponding to any one of the lower second bits other than the first bits of the address as the third qubit 9. In this manner, the third qubit 9 may be easily selected.

Furthermore, in a case where the state data groups having the addresses in which the predetermined number of the values of the first bits from the top are common are stored in the same calculation node, the processing unit 12 selects a qubit having a qubit number as large as possible as the third qubit 9. For example, the processing unit 12 selects, as the third qubit 9, continuous qubits having larger qubit numbers except for the second qubit 8 among the qubits corresponding to any of the second bits of the address.

With this configuration, in a case where a plurality of times of SWAP is collectively executed, the state data having the continuous addresses may be set as a transmission object. As a result, transmission efficiency of the state data may be improved.

Furthermore, the processing unit 12 instructs the calculation nodes 1a, 1b, ... to perform simulation of the quantum calculation based on the second quantum circuit 3 after the optimization. At that time, for example, by also transmitting a program for the simulation to the calculation nodes 1a, 1b, ..., the processing unit 12 may cause efficient simulation based on the optimized second quantum circuit 3 to be performed. Note that the program to be transmitted to the calculation nodes 1a, 1b, ... includes an execution program of a function for collectively executing the plurality of times of SWAP.

For example, the processing unit 12 stores in a distributed manner the state data for each combination of the states in the plurality of calculation nodes 1a, 1b, ... before starting the simulation. Then, the processing unit 12 causes the plurality of calculation nodes 1a, 1b, ... to execute the simulation according to the second quantum circuit 3 after insertion of the second quantum gate.

When executing the second quantum gate, each of the plurality of calculation nodes 1a, 1b, ... that executes the simulation generates an address as a transmission destination by exchanging partial bit strings in an address of the state data to be transmitted. For example, each of the plurality of calculation nodes 1a, 1b, ... swaps a first partial bit string corresponding to the second qubit 8 and a second partial bit string corresponding to the third qubit 9 in a first bit string of a first address of the transmission object state data. Each of the plurality of calculation nodes 1a, 1b, ... transmits the transmission object state data by specifying a second address indicated by a second bit string obtained by the swap of the partial bit strings as a transmission destination.

By causing each of the plurality of calculation nodes 1a, 1b, ... to execute such processing, the SWAP processing may be efficiently performed.

Furthermore, the processing unit 12 may cause each of the plurality of calculation nodes 1a, 1b, ... to generate a pair with a communication partner, and to transmit the state data to the partner of the pair for each communication pair. At that time, each of the plurality of calculation nodes 1a, 1b, ... transmits the state data transmitted by itself to an address of the state data transmitted by the pair partner as a destination. For example, there may be a plurality of calculation nodes of the partner to which each of the plurality of calculation nodes 1a, 1b, ... transmits the transmission object state data when executing the second quantum gate. In this case, each of the plurality of calculation nodes 1a, 1b, ... divides transmission processing of the transmission object state data into a plurality of communication steps. Here, it is assumed that a first calculation node and a second calculation node form a communication pair in a specific communication step. At that time, the processing unit 12 causes the first calculation node to execute processing of transmitting first transmission object state data of a third address to the second calculation node by specifying a fourth address as a transmission destination. Furthermore, the processing unit 12 causes the second calculation node to execute processing of transmitting second transmission object state data of the fourth address to the first calculation node by specifying the third address as a transmission destination. In this manner, under the control of the processing unit 12, mutual communication between the calculation nodes in the communication pair is performed for each communication step.

By causing each of the plurality of calculation nodes 1a, 1b, ... to transmit the state data to the partner of the pair for each communication pair, it is possible to reduce capacity of a buffer used for transmission and reception of the data and to improve efficiency of communication.

### [Second Embodiment]

In a second embodiment, a quantum circuit is optimized for a quantum gate simulator implemented by a plurality of calculation nodes, and quantum calculation based on the quantum circuit is executed by the plurality of calculation nodes in parallel.

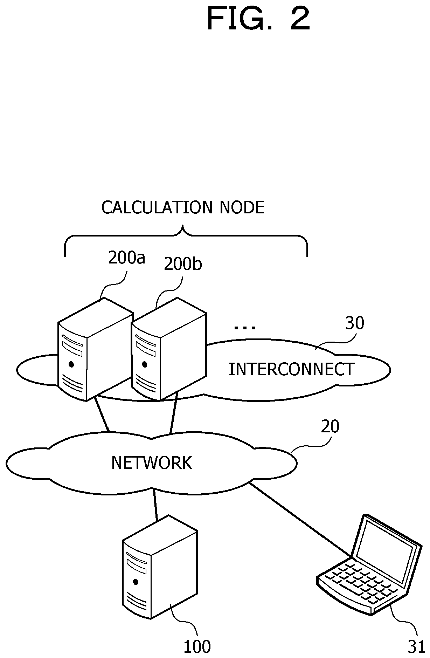

FIG. 2 is a diagram illustrating an example of a system configuration. A plurality of calculation nodes 200a, 200b, ... is coupled with each other by an interconnect 30 capable of performing high-speed communication. The interconnect 30 is, for example, a network in which processors are interconnected by a six-dimensional mesh/torus.

Each of the calculation nodes 200a, 200b, ... is also coupled to a network 20 for control. A control node 100 and a terminal 31 are further coupled to the network 20. The control node 100 is a computer that instructs the calculation nodes 200a, 200b, ... to execute a job. The terminal 31 is a computer that registers, in the control node 100, information regarding a job caused to be executed by the calculation nodes 200a, 200b, ... based on a user operation.

For example, the user may cause the calculation nodes 200a, 200b, ... to simulate an operation of a quantum computer, thereby causing a system illustrated in FIG. 2 to execute quantum calculation based on a quantum circuit. In that case, for example, the user creates the quantum circuit using the terminal 31. Then, the terminal 31 transmits quantum circuit data indicating the created quantum circuit to the control node 100 according to an operation from the user. The control node 100 instructs the calculation nodes 200a, 200b, ... to perform simulation of the quantum calculation based on the quantum circuit.

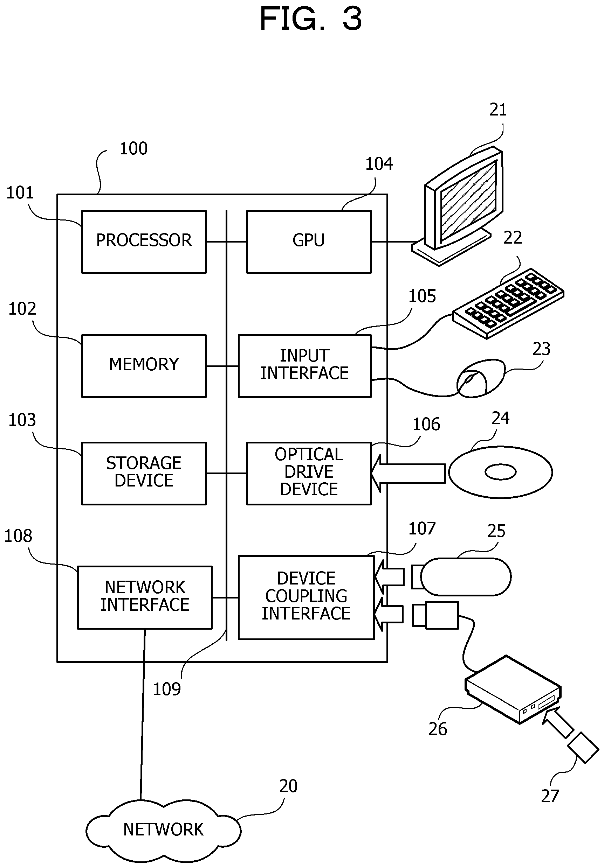

FIG. 3 is a diagram illustrating an example of hardware of the control node. The entire device of the control node 100 is controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least a part of functions implemented by execution of a program by the processor 101 may be implemented by an electronic circuit such as an application specific integrated circuit (ASIC) and a programmable logic device (PLD) .

The memory 102 is used as a main storage device of the control node 100. In the memory 102, at least a part of an operating system (OS) program and an application program to be executed by the processor 101 is temporarily stored. Furthermore, in the memory 102, various types of data to be used in processing by the processor 101 are stored. As the memory 102, for example, a volatile semiconductor storage device such as a random access memory (RAM) is used.

Examples of the peripheral devices coupled to the bus 109 include a storage device 103, a graphics processing unit (GPU) 104, an input interface 105, an optical drive device 106, a device coupling interface 107, and a network interface 108.

The storage device 103 electrically or magnetically writes/reads data in/from a built-in recording medium. The storage device 103 is used as an auxiliary storage device of the control node 100. In the storage device 103, an OS program, an application program, and various types of data are stored. Note that, as the storage device 103, for example, a hard disk drive (HDD) or a solid state drive (SSD) may be used.

The GPU 104 is an arithmetic device that performs image processing, and is also referred to as a graphic controller. A monitor 21 is coupled to the GPU 104. The GPU 104 causes a screen of the monitor 21 to display an image according to an instruction from the processor 101. Examples of the monitor 21 include a display device using organic electro luminescence (EL), a liquid crystal display device, and the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like to read data recorded in an optical disk 24 or write data to the optical disk 24. The optical disk 24 is a portable recording medium in which data is recorded in a readable manner by reflection of light. Examples of the optical disk 24 include a digital versatile disc (DVD), a DVD-RAM, a compact disc read only memory (CD-ROM), a CD-recordable (R)/rewritable (RW), and the like.

The device coupling interface 107 is a communication interface for coupling peripheral devices to the control node 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card-type recording medium.

The network interface 108 is coupled to the network 20. The network interface 108 performs transmission and reception of data with another computer or communication device via the network 20. The network interface 108 is, for example, a wired communication interface coupled to a wired communication device such as a switch or a router with a cable. Furthermore, the network interface 108 may be a wireless communication interface that is coupled to and communicates with a wireless communication device such as a base station or an access point by radio waves.

The control node 100 implements processing functions of the second embodiment by, for example, executing a program recorded in a computer-readable recording medium. The program in which processing content to be executed by the control node 100 is described may be recorded in various recording media. For example, the program to be executed by the control node 100 may be stored in the storage device 103. The processor 101 loads at least a part of the program in the storage device 103 into the memory 102, and executes the program. Furthermore, the program to be executed by the control node 100 may also be recorded in a portable recording medium such as the optical disk 24, the memory device 25, or the memory card 27. The program stored in the portable recording medium becomes executable after being installed in the storage device 103 under the control of the processor 101, for example. Furthermore, the processor 101 may also read the program directly from the portable recording medium and execute the program.

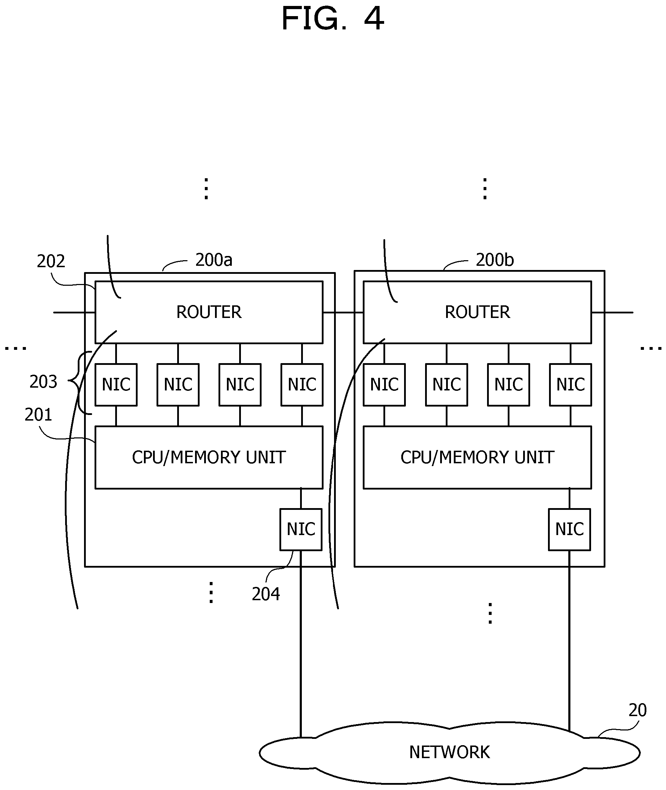

FIG. 4 is a diagram illustrating an example of a hardware configuration of the calculation node. The calculation node 200a includes a CPU/memory unit 201 and a router 202. The CPU/memory unit 201 and the router 202 are coupled by a plurality of communication interfaces (NICs) 203. Furthermore, an NIC 204 for coupling to the network 20 for control is also coupled to the CPU/memory unit 201.

The CPU/memory unit 201 includes a CPU having a plurality of cores and a memory. In the CPU/memory unit 201, a process (execution unit of processing) is generated for each core. In a case where the process for each core of the CPU/memory unit 201 performs synchronous processing with a process in another calculation node, communication with the another calculation node 200b, ... is performed via the router 202.

The router 202 communicates with, for example, a calculation node adjacent in each of a three-dimensional direction. The router 202 transmits data to be transmitted from the CPU/memory unit 201 to another calculation node to the adjacent calculation node in a direction corresponding to a position of the calculation node in the interconnect 30. Furthermore, when the router 202 receives data from the adjacent calculation node to a process in the CPU/memory unit 201, the router 202 transmits the data to the CPU/memory unit 201. Moreover, in a case where the data received from the adjacent calculation node is data directed to another calculation node, the router 202 transmits the data to an adjacent calculation node in a direction corresponding to a position of the calculation node as a transmission destination in the interconnect 30.

The another calculation node 200b, ... has a hardware configuration similar to that of the calculation node 200a. With the calculation nodes 200a, 200b, ... of the hardware as illustrated in FIG. 4 subjected to the mesh/torus coupling in the three-dimensional direction, a three-dimensional mesh/torus network is achieved. A plurality of three-dimensional calculation node groups subjected to the mesh/torus coupling is generated, and the plurality of calculation node groups is further subjected to the mesh/torus coupling in the three-dimensional direction, whereby a six-dimensional mesh/torus network is achieved.

By the control node 100 and the calculation nodes 200a, 200b, ... having the above hardware, the processing functions of the second embodiment may be implemented. Note that the information processing device 10 indicated in the first embodiment may also be implemented by hardware similar to that of the control node 100 or the calculation node 200a.

Here, a factor that lowers calculation efficiency in a case where the quantum calculation is simulated by the calculation nodes 200a, 200b, ... that are classical computers will be described.

When the number of qubits to be operated in the quantum circuit to be calculated increases, an amount of data indicating states of the qubits may not be fitted in the memory of one calculation node. Therefore, the data indicating the states of the qubits is held in a distributed manner by the plurality of calculation nodes 200a, 200b, .... In a case where a gate operation that may not be calculated only by the data stored in its own memory is performed, each of the calculation nodes 200a, 200b, ... performs communication between the calculation nodes, and acquires data used for the calculation from another calculation node. For example, in the case of a gate operation in which a qubit having a qubit number of a predetermined value or less is to be operated, the calculation nodes 200a, 200b, ... may perform calculation corresponding to the gate operation without performing communication between the calculation nodes. On the other hand, in the case of a gate operation in which a qubit having a qubit number exceeding the predetermined value is to be operated, the calculation nodes 200a, 200b, ... perform calculation involving communication between the calculation nodes. Hereinafter, the gate operation in which the calculation involving communication between the calculation nodes is performed is referred to as a "cross-node gate operation". On the other hand, a gate operation in which calculation may be performed without performing communication between the calculation nodes is referred to as an "intra-node gate operation".

In a case where simulation of quantum calculation in which many qubits are operated is performed, a very huge matrix is calculated. Therefore, communication associated with the cross-node gate operation becomes a bottleneck in improving calculation efficiency. Thus, in the system of the second embodiment, for example, the quantum circuit is optimized so that the control node 100 may efficiently implement the cross-node gate operation in advance. For example, the control node 100 optimizes the quantum circuit so as to perform swap processing between a state of a qubit to be operated by the cross-node gate operation and a state of a qubit for which the intra-node gate operation may be performed. By executing simulation based on the optimized quantum circuit, state data used for calculation of the cross-node gate operation is collected in the local memory in each of the calculation nodes 200a, 200b, .... As a result, the intra-node gate operation may be performed instead of the cross-node gate operation.

Moreover, the control node 100 sets the quantum circuit so as to collectively execute the swap processing of the state data according to the plurality of the cross-node gate operations. By collectively implementing the swap processing of the state data, a total amount of communication may be reduced more than a total amount of communication that has occurred each time the cross-node gate operation is performed. In particular, in a quantum gate simulator, communication tends to be a bottleneck, and significant performance improvement may be achieved by reducing the total amount of communication.

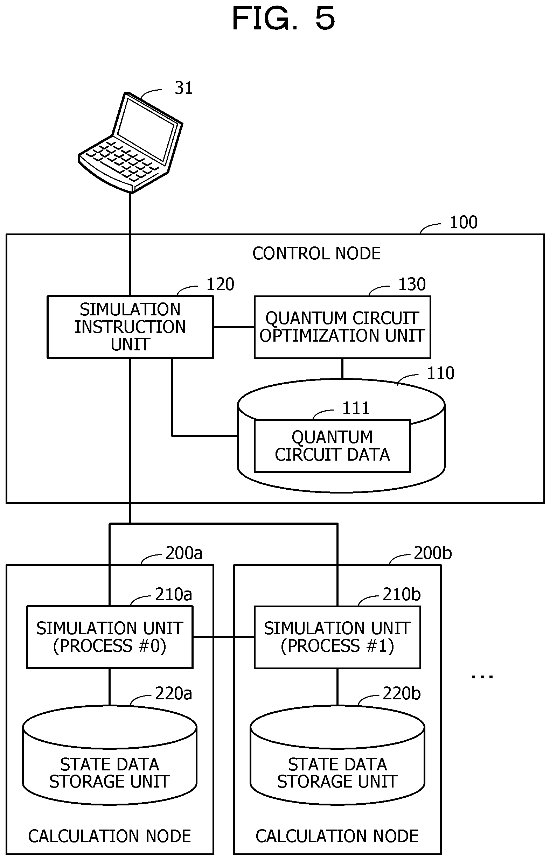

FIG. 5 is a diagram illustrating an example of a function of each node for implementing the quantum gate simulator. The control node 100 includes a storage unit 110, a simulation instruction unit 120, and a quantum circuit optimization unit 130. The storage unit 110 stores quantum circuit data 111 indicating a quantum circuit to be calculated.

The simulation instruction unit 120 acquires the quantum circuit data 111 from the terminal 31 used by a user, and stores the quantum circuit data 111 in the storage unit 110. Furthermore, the simulation instruction unit 120 instructs the quantum circuit optimization unit 130 to optimize a quantum circuit indicated in the acquired quantum circuit data 111. Then, the simulation instruction unit 120 generates a job for execution of simulation based on the quantum circuit indicated in the quantum circuit data 111, and instructs the calculation nodes 200a, 200b, ... to execute the job.

The quantum circuit optimization unit 130 performs optimization processing of a quantum circuit indicated in the quantum circuit data 111 so that simulation of quantum calculation by the calculation nodes 200a, 200b, ... may be efficiently executed. For example, the quantum circuit optimization unit 130 inserts a SWAP gate before a cross-node gate operation, and converts the cross-node gate operation into an intra-node gate operation. The quantum circuit optimization unit 130 updates the quantum circuit data 111 according to the optimized quantum circuit.

The calculation node 200a includes a simulation unit 210a and a state data storage unit 220a. The simulation unit 210a executes simulation of quantum calculation according to a quantum circuit indicated in the quantum circuit data 111 in cooperation with another calculation node. The state data storage unit 220a stores state data of a quantum state allocated to the calculation node 200a.

Similarly to the calculation node 200a, the calculation node 200b includes a simulation unit 210b and a state data storage unit 220b. Each of the simulation unit 210b and the state data storage unit 220b has the same function as that of the element having the same name in the calculation node 200a. Other calculation nodes (not illustrated) also have functions similar to those of the calculation nodes 200a and 200b.

A process number that may be identified in the system is assigned to a process of executing the simulation unit of each of the plurality of calculation nodes 200a, 200b, .... For example, a process number of a process of executing the simulation unit 210a of the calculation node 200a is "0". A process number of a process of executing the simulation unit 210b of the calculation node 200b is "1". Each of the simulation units 210a, 210b, ... in the calculation nodes 200a, 200b, ... may specify a process of a communication partner by the process number. Note that inter-process communication across the calculation nodes is performed at high speed by the interconnect 30.

Note that the function of each element illustrated in FIG. 5 may be implemented by, for example, causing a computer to execute a program module corresponding to the element.

When the simulation of the quantum calculation based on the quantum circuit is executed in such a system, the state data indicating the states of the qubits is stored in a distributed manner in the state data storage units 220a, 220b, ... of the calculation nodes 200a, 200b, ..., respectively. Note that the state data storage units 220a, 220b, ... are provided in a semiconductor memory from and into which reading and writing may be performed at high speed.

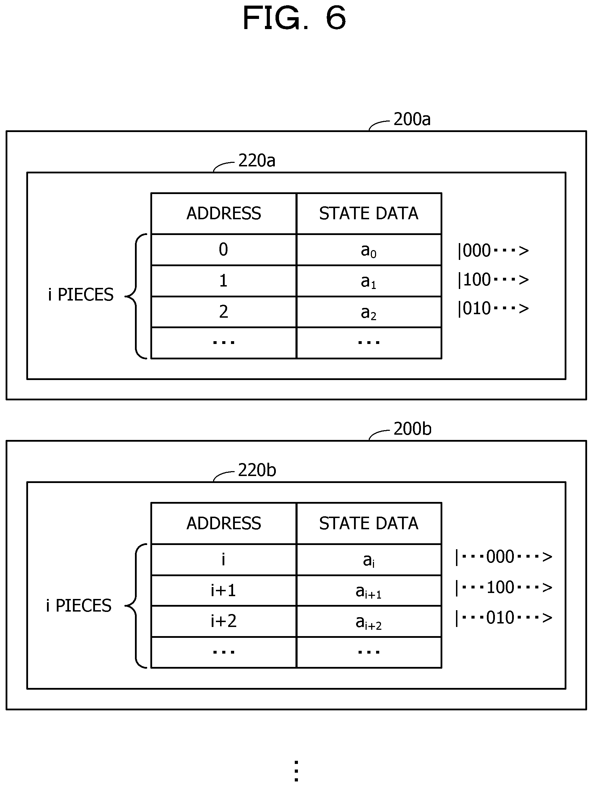

FIG. 6 is a diagram illustrating an example of the distribution storage of the state data. For example, the state data for each combination of the states of the qubits to be operated by the quantum circuit is stored in a distributed manner in the calculation nodes 200a, 200b, .... An address is assigned to each piece of the state data.

For example, in the state data storage unit 220a of the calculation node 200a, state data of addresses "0" to "i - 1" is stored. For example, state data "ao" of the address "0" represents a probability amplitude in a case where the states of all the qubits are |0>. State data "a₁" of the address "1" represents a probability amplitude in a case where a state of a first qubit (qubit number "0") is |1> and states of all other qubits are |0>. A size of each piece of the state data is, for example, 32 bytes.

The address is obtained by replacing a value indicating a state (state of another qubit) corresponding to state data to which the address is assigned with a decimal numerical value. For example, an address of state data for a state |01000> is a value "3" obtained by converting a binary number represented by "00010" in which arrangement of numerical values of the state is reversed in order (a smaller qubit number is rearranged to a lower digit) into a decimal number.

In the example of FIG. 6, in the state data storage unit 220a of the calculation node 200a, i (i is a natural number) pieces of state data are stored. In this case, in the state data storage unit 220b of the calculation node 200b, i pieces of state data from addresses "i" to "2 × i - 1" are stored. Similarly, i pieces of state data are also stored in each of the other calculation nodes.

In this manner, the state data for each of states that may be taken by the plurality of qubits is stored in a distributed manner in the plurality of calculation nodes 200a, 200b, .... In this case, each of the calculation nodes 200a, 200b, ... may execute an intra-node gate operation without communication with the other calculation nodes as long as calculation is possible only with the state data held by itself. Such an intra-node gate operation is a gate operation in which a qubit having a qubit number of a predetermined value or less is to be operated.

On the other hand, a gate operation in which a qubit having a qubit number larger than the predetermined value is to be operated is a cross-node gate operation that needs data communication with the other calculation nodes. The cross-node gate operation may be changed to the intra-node gate operation by performing SWAP processing before the cross-node gate operation.

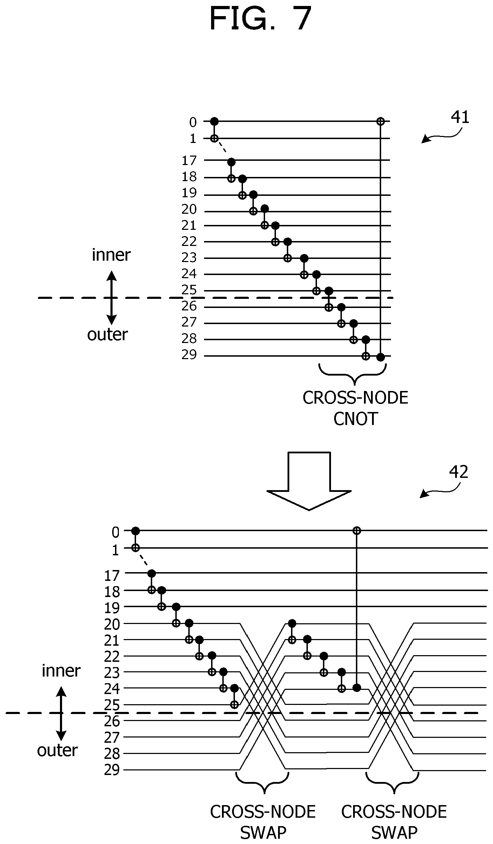

FIG. 7 is a diagram illustrating an example of processing of changing the cross-node gate operation to the intra-node gate operation. In FIG. 7, a quantum circuit 41 in which 30 qubits are to be operated is illustrated. In this case, the number of combinations of states that may be taken by the qubits is 2³⁰. Here, it is assumed that 2²⁶ pieces of state data are stored in each of 2⁴ calculation nodes.

For example, state data corresponding to a case where a state of each of qubits having qubit numbers "26" to "29" becomes |0> (| ... 0000>) is stored in the calculation node 200a. Furthermore, state data corresponding to a case where the state of the qubit having the qubit number "26" becomes |1> and the state of each of the qubits having the qubit numbers "26" to "29" becomes |0> (| ... 1000>) is stored in the calculation node 200b.

In such a case, a gate operation in which 26 qubits having qubit numbers "0" to "25" are to be operated is the intra-node gate operation. For example, in the quantum circuit 41, a CNOT gate between qubits having adjacent qubit numbers is included. The CNOT gate is indicated by a black circle set on a side of a control qubit, a white circle (including a cross line therein) set on a side of a target qubit, and a line coupling the black circle and the white circle. The CNOT gate is a gate operation for inverting a state of a target qubit in a case where a control qubit is |1>.

Each of the calculation nodes 200a, 200b, ... mutually exchanges the respective values of two pieces of state data corresponding to states of all qubits in which states of the control qubits are |1> and only the states of the target qubits are different according to the CNOT gate. Thus, when the pieces of state data whose values are to be exchanged are stored in the same calculation node, an operation of the CNOT gate is the intra-node gate operation.

In a case where the number of pieces of state data stored in each of the calculation nodes 200a, 200b, ... is 2^{m} (m is a natural number), when a qubit number of an operation object of a gate operation is "m - 1" or less, the gate operation is the intra-node gate operation. In the example of FIG. 7, it is assumed that 2²⁶ pieces of state data are stored in each of the calculation nodes 200a, 200b, .... In this case, an operation of the CNOT gate in which a qubit having a qubit number "25" or less is to be operated is the intra-node gate operation. Other operations of the CNOT gate are the cross-node gate operations (cross-node CNOT).

Hereinafter, a qubit having a qubit number equal to or smaller than a qubit number ("25" in the example of FIG. 7) serving as a determination reference between the intra-node gate operation and the cross-node gate operation is referred to as an "inner". Furthermore, a qubit having a qubit number larger than the qubit number serving as the determination reference is referred to as an "outer".

In the quantum circuit 41 illustrated in FIG. 7, the cross-node CNOT is continuously present. In such a case, the quantum circuit optimization unit 130 optimizes the cross-node CNOT so as to transition to calculation in which inner-side qubits are to be operated using a SWAP gate (cross-node SWAP) which is the cross-node gate operation. In a quantum circuit 42 after the optimization, for qubits to be operated by the cross-node CNOT, states of the inner-side qubits and outer-side qubits are swapped, and all operations of the CNOT gate are executed on the inner-side qubits as objects. With this configuration, communication that has occurred each time the cross-node CNOT is performed may be aggregated into the swap processing by the SWAP gate.

Note that the operation of the cross-node SWAP is inserted before and after the cross-node CNOT in the quantum circuit 41. Whether or not state data is to be subjected to the operation of the cross-node SWAP may be determined based on a binary notation of an address of the state data.

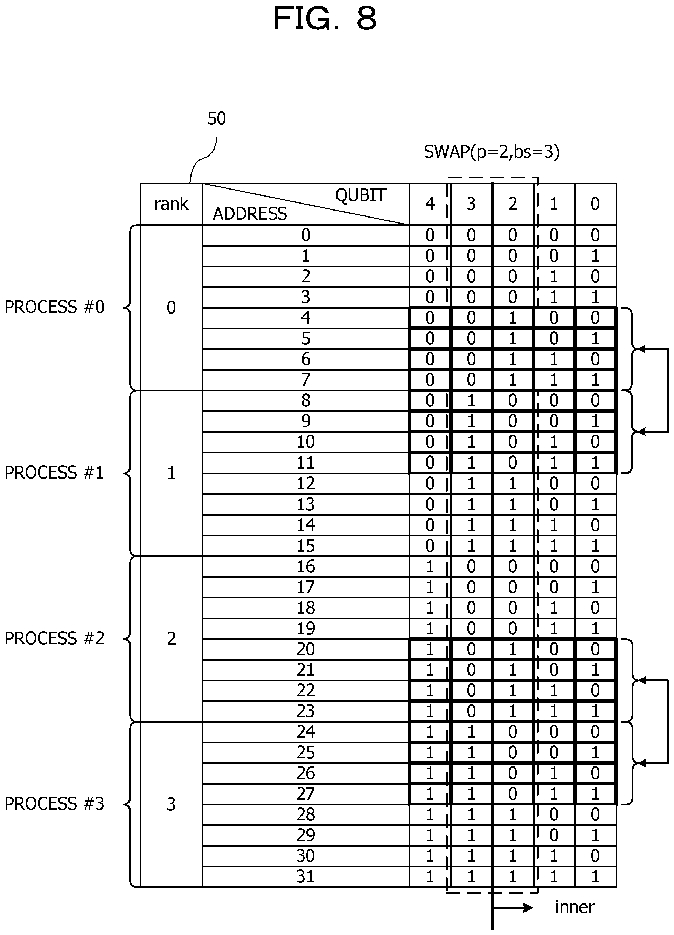

FIG. 8 is a diagram illustrating an example of the cross-node SWAP operation. In FIG. 8, a state address table 50 is illustrated. In the state address table 50, a value of an address assigned to each piece of state data and a binary notation of the value are indicated.

In the example of FIG. 8, quantum calculation using five qubits is assumed. In a case where the number of qubits is 5, there are 32 combinations of states of the respective qubits, and 32 pieces of state data of addresses "0" to "31" are stored in a distributed manner in the plurality of calculation nodes 200a, 200b, ....

The state data is classified into ranks "0" to "3". In the example of FIG. 8, addresses "0" to "7" are classified into the rank "0". Addresses "8" to "15" are classified into the rank "1". Addresses "16" to "23" are classified into the rank "2". Addresses "24" to "31" are classified into the rank "3".

The state data having the same rank is stored in the same calculation node. Furthermore, a process of the simulation unit in each calculation node executes processing on the state data of the rank corresponding to the calculation node.

A value of each digit in a case where an address is converted into a binary number indicates a state of a qubit corresponding to the digit. A value of a lower digit corresponds to a qubit having a smaller qubit number. In the example of FIG. 8, a first digit of the binary notation of the address corresponds to a qubit having a qubit number "0". A second digit corresponds to a qubit having a qubit number "1". A third digit corresponds to a qubit having a qubit number "2". A fourth digit corresponds to a qubit having a qubit number "3". A fifth digit corresponds to a qubit having a qubit number "4".

In the example of FIG. 8, it is assumed that four calculation nodes are used for simulation of the quantum circuit. In this case, eight pieces of state data are stored in each calculation node. Then, "8 = 2³" is satisfied, and a qubit having a qubit number of "2" (3 - 1) or less is an inner qubit.

An operation by the SWAP gate is a two-qubit operation, and two qubits are specified as operation objects. For example, a SWAP operation may be represented as SWAP (p, q). In the parentheses, p and q are integers indicating qubit numbers of the operation objects.

In the SWAP (p, q) operation, the respective qubits having the qubit number "p" and the qubit number "q" are to be operated. State data in which XOR (exclusive OR) of values indicating states of the qubits having the qubit number "p" and the qubit number "q" is "1" is to be swapped by the SWAP operation. State data having an address of a value obtained by performing a NOT operation of the values corresponding to the qubits having the qubit number "p" and the qubit number "q" in an address (binary notation) of the state data to be swapped by the SWAP operation is a swap destination. The NOT operation is a logical operation for changing "0" to "1" and "1" to "0". Then, the SWAP operation is completed by swapping the state data to be swapped with the state data as the swap destination.

For example, a case where a SWAP (2, 3) operation is implemented will be considered. In this case, state data in which XOR of a value corresponding to a qubit "2" and a value corresponding to a qubit "3" of an address is "1" is to be subjected to the SWAP operation. In the example of FIG. 8, the state data of the addresses "4" to "11" and "20" to "27" are to be operated. Then, state data having addresses of values obtained by performing a NOT operation on each of the values corresponding to the qubit "2" and the values corresponding to the qubit "3" of the addresses of the state data to be operated become a swap destination.

In the example of FIG. 8, a qubit having a qubit number "2" or less is an inner qubit. Thus, SWAP (2,3) is a cross-node SWAP that operates the outer qubit and the inner qubit. In the case of the cross-node SWAP, the swap destination of the state data to be subjected to the SWAP operation is state data stored in a calculation node different from the calculation node storing the state data.

For example, the respective swap destinations of the state data of the addresses "4" to "7" are the state data of the addresses "8" to "11". Conversely, the respective swap destinations of the state data of the addresses "8" to "11" are the state data of the addresses "4" to "7". Furthermore, the respective swap destinations of the state data of the addresses "20" to "23" are the state data of the addresses "24" to "27". Conversely, the respective swap destinations of the state data of the addresses "24" to "27" are the state data of the addresses "20" to "23".

In this manner, based on the address of each piece of state data, it is possible to determine whether the state data is to be subjected to the SWAP operation, and when the state data is to be subjected to the operation, which state data is the swap destination. Furthermore, in a case where the SWAP operation is continuously performed on the continuous qubits as illustrated in FIG. 7, the continuous SWAP operations may be combined.

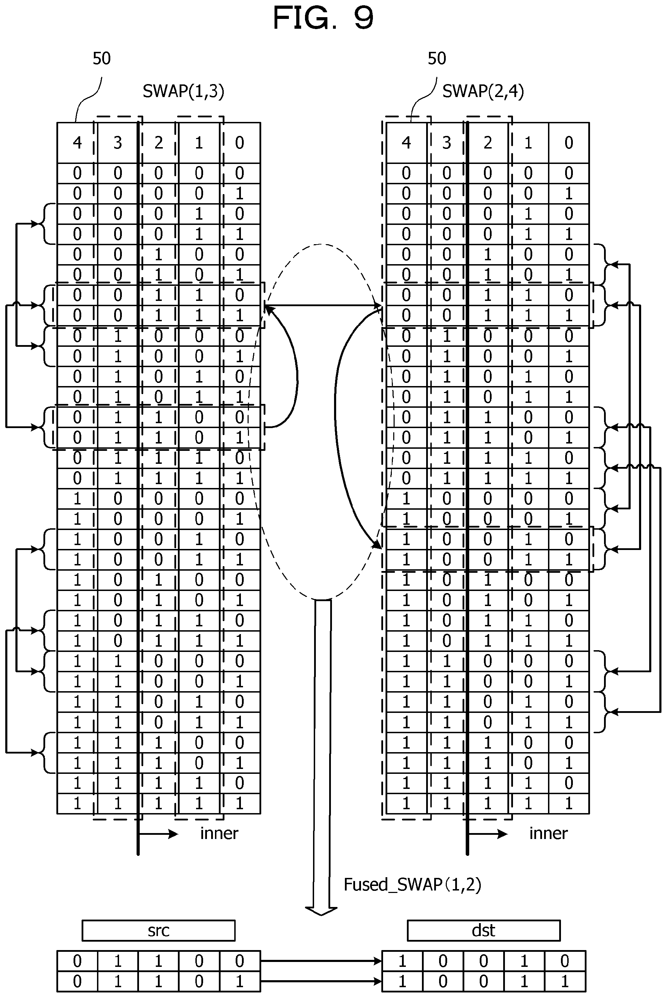

FIG. 9 is a diagram illustrating an example of combination processing of the SWAP operation. In the state address table 50 illustrated in FIG. 9, the fields of the rank and the address are omitted, and the binary notation of the address and the qubit number of the qubit corresponding to each digit are indicated.

The example of FIG. 9 illustrates a swap relationship of the state data in each SWAP operation in a case where SWAP (2, 4) is performed subsequent to SWAP (1, 3).

For example, the state data of the address "12" (binary notation "01100") becomes the state data of the address "6" (binary notation "00110") by SWAP (1, 3). Furthermore, the state data of the address "13" (binary notation "01101") becomes the state data of the address "7" (binary notation "00111") by SWAP (1, 3).

Furthermore, the state data of the address "6" (binary notation "00110") becomes the state data of the address "18"(binary notation "10010") by SWAP (2, 4). Furthermore, the state data of the address "7" (binary notation "00111") becomes the state data of the address "19" (binary notation "10011") by SWAP (2, 4).

In SWAP (1, 3) and SWAP (2, 4), one qubit numbers "1" and "2" of the operation objects are continuous, and the other qubit numbers "3" and "4" are also continuous. In a case where the two SWAP operations are continuous, a SWAP operation obtained by combining these SWAP operations may be defined. Hereinafter, the SWAP operation obtained by the combination is referred to as Fused_SWAP (p, bs). A qubit number of a qubit serving as a base point is represented by p. The number of SWAP operations to be combined (the number of continuous qubit numbers (block size) specified as operation objects after the combination) is represented by bs. When SWAP (1, 3) and SWAP (2, 4) illustrated in FIG. 9 are combined, Fused_SWAP (1, 2) is obtained.

In Fused_SWAP (1, 2), state data as a transmission source and state data as a transmission destination are specified by "src" (source) and "dst" (destination) instead of a swap pair. For example, in the example illustrated in FIG. 9, "dst" in a case where "src" is "01100" is "10010". Furthermore, "dst" in a case where "src" is "01101" is "10011". Such a relationship between "src" and "dst" is obtained for each piece of the state data as the transmission source in Fused_SWAP (1, 2).

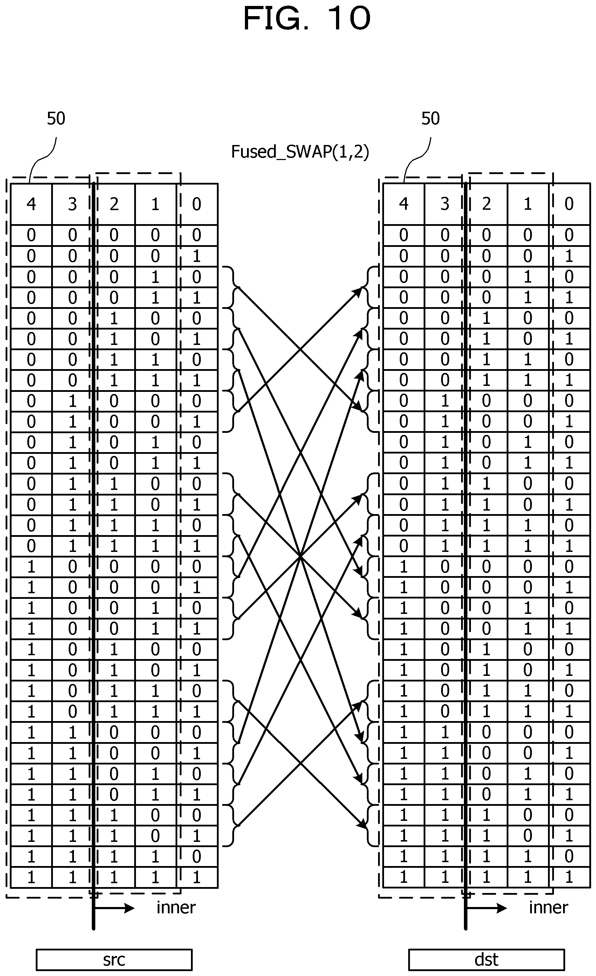

FIG. 10 is a diagram illustrating an example of a correspondence relationship between "src" and "dst" by Fused_SWAP. In FIG. 10, values (binary notation) of addresses on an "src" side and value (binary notation) of addresses on a "dst" side of Fused SWAP (1, 2) are coupled by arrows. By updating each piece of the state data corresponding to the address of "dst" by each piece of the state data corresponding to the address of "src" illustrated in FIG. 10, processing corresponding to the Fused_SWAP (1, 2) operation is completed.

A result of such processing of Fused_SWAP (p, bs) is equivalent to a result of the following processing.

```
 Fused_SWAP(int p, int bs){
 for(int x=p; x<p+bs; x++){SWAP(x,x+bs);}
 }
```

In other words, the same processing result as processing of repeatedly executing continuous SWAP operations before combination may be obtained by Fused_SWAP (p, bs). Moreover, in Fused_SWAP (p, bs), since "src" and "dst" are obtained and the processing result of the transmission destination of the state data is determined, even when a large number of SWAP operations are combined, transmission of each piece of the state data is only needed once. Therefore, the number of times of communication may be reduced as compared with a case where SWAP is repeatedly executed.

Next, a method of calculating "dst" from "src" according to the optional p and bs in Fused_SWAP will be described.

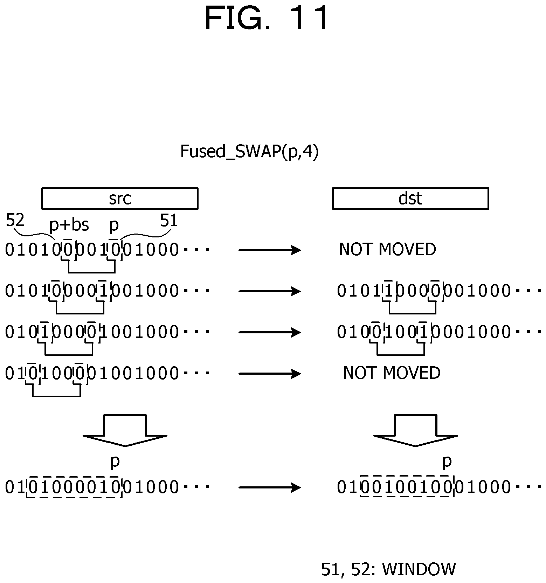

FIG. 11 is a diagram illustrating a first example of the method of calculating "dst" based on "src". In the example of FIG. 11, p is set to an optional value, and bs is set to "4". For example, the simulation unit 210a of the calculation node 200a performs the following processing according to a function of Fused_SWAP (p, 4).

The simulation unit 210a sets two windows 51 and 52 separated by bs in a bit string in a binary number display of an address of "src". Each bit of the bit string corresponds to a qubit number. The first window 51 is set at a position of the qubit number "p", and the second window 52 is set at a position of a qubit number "p + bs".

The first window 51 transitions from the position of the qubit number "p" to a position of "p + bs - 1". The second window 52 transitions from the position of the qubit number "p + bs" to a position of "p + 2bs - 1".

The simulation unit 210a determines whether or not state data of the address of "src" is moved by a SWAP operation between qubits corresponding to bits at the positions of the respective windows 51 and 52 while transitioning the positions of the two windows 51 and 52. Specifically, in a case where values of the bits at the positions of the two windows 51 and 52 are the same, the simulation unit 210a determines that the state data is not moved. Furthermore, in a case where the values of the bits at the positions of the two windows 51 and 52 are different (XOR is "1"), the simulation unit 210a determines that the state data is moved.

Then, the simulation unit 210a sets a bit string obtained by performing NOT (inverting bits) on the values of the bits at the positions of the two windows 51 and 52 in which XOR is "1" in the two windows 51 and 52 as "dst". In the example of FIG. 11, the bit string of "src" is "010100001001000 ...", and a finally obtained bit string of "dst" is "010010010001000 ...".

In the example of FIG. 11, in order to facilitate understanding of the method of determining the value of "dst", values between the two windows 51 and 52 are compared one by one to obtain "dst" from "src". However, it is also possible to calculate "dst" more easily.

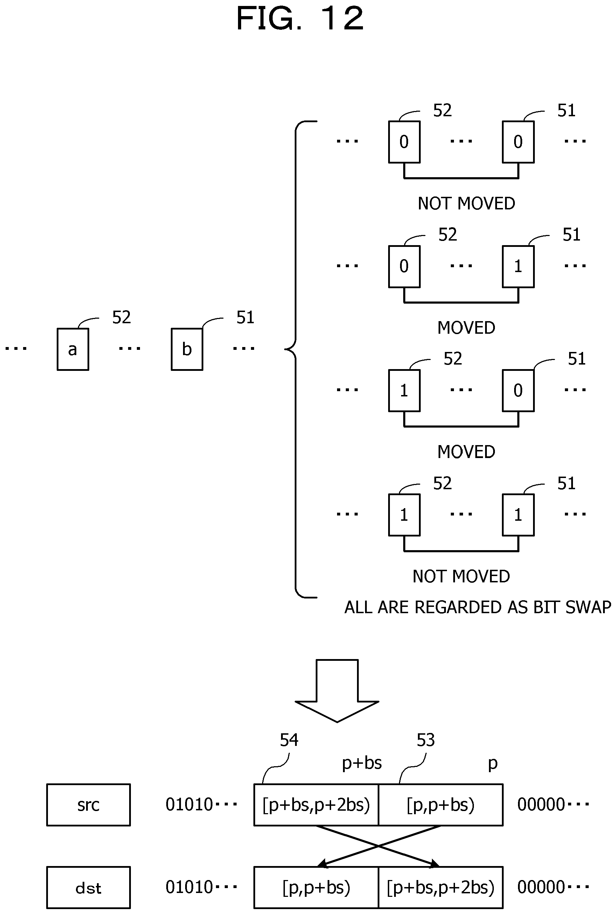

FIG. 12 is a diagram illustrating a second example of the method of calculating "dst" based on "src". The example illustrated in FIG. 12 is the method of calculating "dst" by swapping the values of the bits in the bit string of "src".

In a bit string of "src" of a certain address, there are four possible combinations of the values of the bits in the two windows 51 and 52. When the value of the bit in the first window 51 is "0" and the value of the bit in the second window 52 is also "0", the state data corresponding to the address to be determined is not moved by SWAP between the qubits corresponding to these bits. When the state data is not moved, an operation on the values of the bits to obtain "dst" is unnecessary. Note that, since the values of both bits are "0", content of the bit string is not changed even when the values of the bits are swapped. In other words, the values of the bits may be swapped. The same applies to a case where the value of the bit in the first window 51 is "1" and the value of the bit in the second window 52 is also "1".

When the value of the bit in the first window 51 is "1" and the value of the bit in the second window 52 is "0", the state data corresponding to the address to be determined is moved by SWAP between the qubits corresponding to these bits. In a case where the state data is moved, the values of both bits are swapped to obtain "dst". The same applies to a case where the value of the bit in the first window 51 is "0" and the value of the bit in the second window 52 is "1".

In this manner, for all the combinations of the values of the bits in the windows 51 and 52, it may be regarded that swap of the values of the bits takes place in order to obtain "dst". Furthermore, as illustrated in FIG. 11, each SWAP before being combined into Fused_SWAP is independent. In other words, there is no influence of bit inversion of the address due to a result of another SWAP. Thus, in order to obtain "dst", the simulation unit 210a swaps values of a partial bit string 53 and a partial bit string 54 in the bit string of "src". A range of qubit numbers corresponding to bits included in the partial bit string 53 is [p, p + bs) . A range of qubit numbers corresponding to bits included in the partial bit string 54 is [p + bs, p + 2bs) . A result of the swap is a bit string representing "dst".

Meanwhile, in Fused_SWAP described so far, two qubit groups to be swapped are a group of "p" to "p + bs - 1" and a group of "p + bs" to "p + 2bs - 1" by qubit numbers. In this manner, although the case where another qubit is not sandwiched between two qubit groups has been described, Fused_SWAP is also possible in a case where another qubit is sandwiched between two qubit groups.

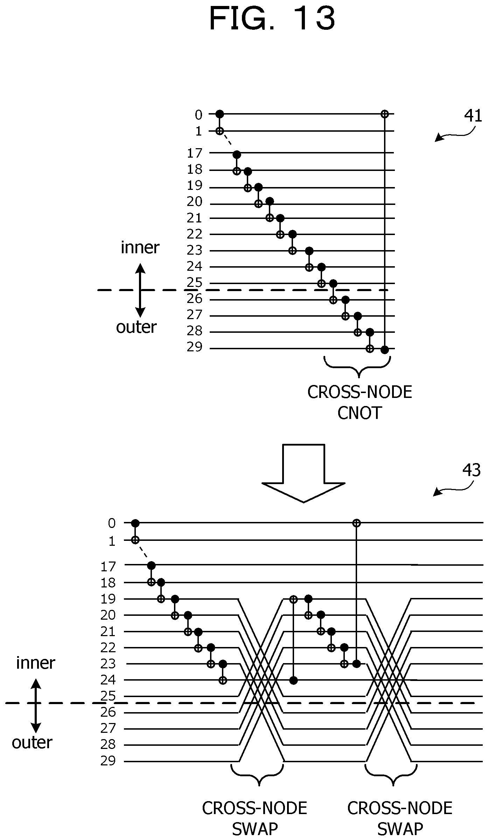

FIG. 13 is a diagram illustrating an example of Fused_SWAP in a case where another qubit is sandwiched between two qubit groups to be swapped. In the example of FIG. 13, a quantum circuit 43 in which a cross-node SWAP between the qubits having the qubit numbers "19" to "23" and the qubits having the qubit numbers "25" to "29" is inserted is generated based on the quantum circuit 41. In the quantum circuit 43, the qubit having the qubit number "24" is sandwiched between the two qubit groups to be swapped.

In such a case, an argument q is added to a function of Fused_SWAP to obtain Fused_SWAP (p, q, bs). A qubit number of a head qubit of a qubit group including an outer-side qubit is represented by q. In the example of FIG. 13, "p = 19", "q = 25", and "bd = 5" are satisfied. Also in a case where another qubit is sandwiched between the two qubit groups to be swapped, "dst" may be easily obtained from "src".

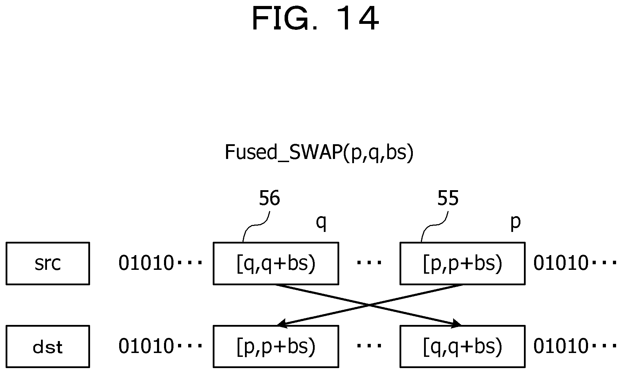

FIG. 14 is a diagram illustrating a third example of the method of calculating "dst" based on "src". As in the example illustrated in FIG. 12, also in a case where another qubit is sandwiched between the two qubit groups to be swapped, "dst" may be obtained by swapping values of partial bit strings 55 and 56 in the bit string of "src". A range of qubit numbers corresponding to bits included in the partial bit string 55 is [p, p + bs) . A range of qubit numbers corresponding to bits included in the partial bit string 56 is [q, q + bs) .

Next, a method of swapping the state data will be described. As illustrated in FIG. 8, the simulation is executed in parallel in a plurality of processes, and each process operates in each of the calculation nodes. Therefore, communication between the processes is communication across the calculation nodes. In Fused_SWAP, a large number of pieces of state data are transferred across the calculation nodes as illustrated in FIG. 10. In a case where communication is performed across the calculation nodes, when capacity of a buffer used for data transmission and reception is too large, data transfer becomes inefficient.

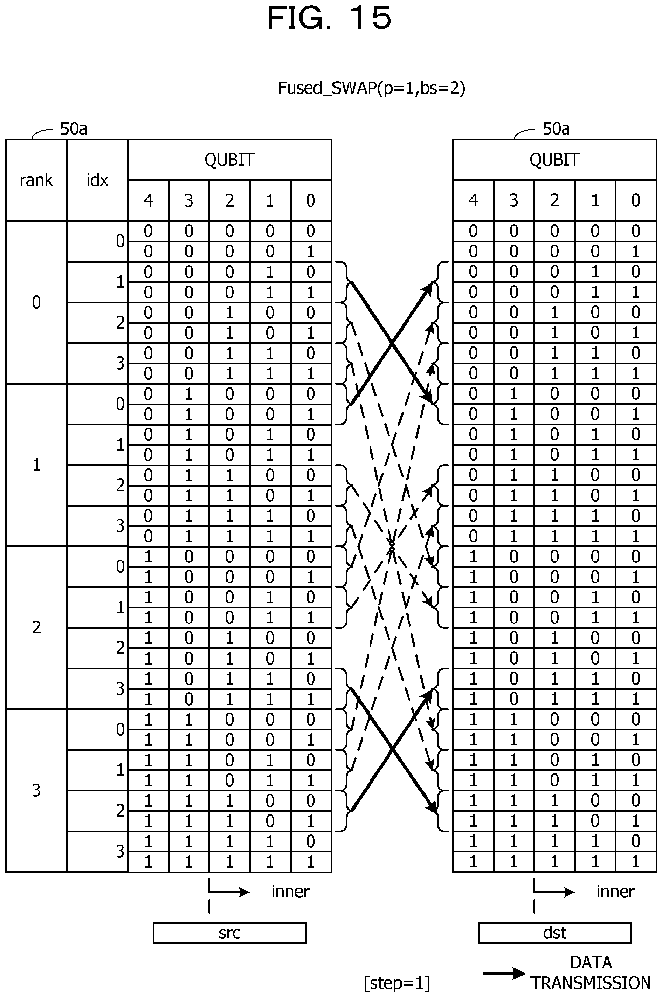

Thus, each of the calculation nodes 200a, 200b, ... matches state data to be transmitted to another calculation node with state data to be updated by state data received from the another calculation node, and executes transmission and reception of the state data in parallel. Hereinafter, a transmission procedure of state data between calculation nodes by Fused_SWAP will be described with reference to FIGs. 15 to 17.

FIG. 15 is a diagram (1/3) illustrating an example of the transmission procedure of the state data between the calculation nodes by Fused_SWAP. In FIG. 15, a correspondence relationship between "src" and "dst" in transmission of state data in a case where Fused_SWAP (p = 1, bs = 2) is implemented is illustrated. In the case of Fused SWAP (p = 1, bs = 2), it is possible to collectively transmit state data of two elements whose addresses are continuous in one data block. Thus, in a state address table 50a illustrated in FIG. 15, for each rank, an index (idx) in the rank is assigned for each two continuous addresses (binary notation).

The state data is stored in calculation data for each rank, and in a case where "src" and "dst" belong to different ranks, the state data is transmitted across the calculation nodes. In the example of FIG. 15, each calculation node transmits the state data three times.

In order to improve efficiency of transmission and reception of the state data, each calculation node transmits the state data to be swapped at the same time as a transmission destination in a relationship for swapping the state data (communication pair). In FIG. 15, transmission of a data block in a first step (step = 1) is indicated by a thick arrow.

For example, in transmission of state data in the first step, a calculation node storing state data of a rank "0" transmits a data block of state data of its own index "1". A transmission destination is a storage area of state data of an index "0" of a calculation node storing state data of a rank "1". At the same time, the calculation node storing the state data of the rank "1" transmits a data block of the state data of its own index "0". A transmission destination is a storage area of the state data of the index "1" in the calculation node storing the state data of the rank "0".

In this manner, a data block transmitted in the same step is paired with a data block of a transmission destination updated by the data block. Such two data blocks forming a pair are referred to as a SWAP pair.

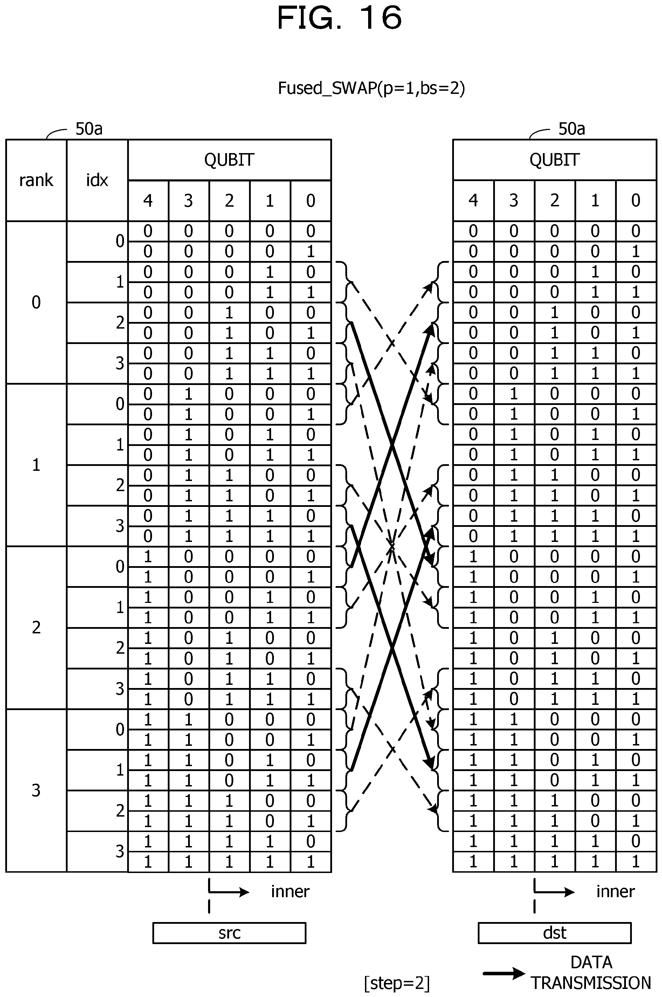

FIG. 16 is a diagram (2/3) illustrating an example of the transmission procedure of the state data between the calculation nodes by Fused_SWAP. In FIG. 16, transmission of a data block in a second step (step = 2) is indicated by a thick arrow.

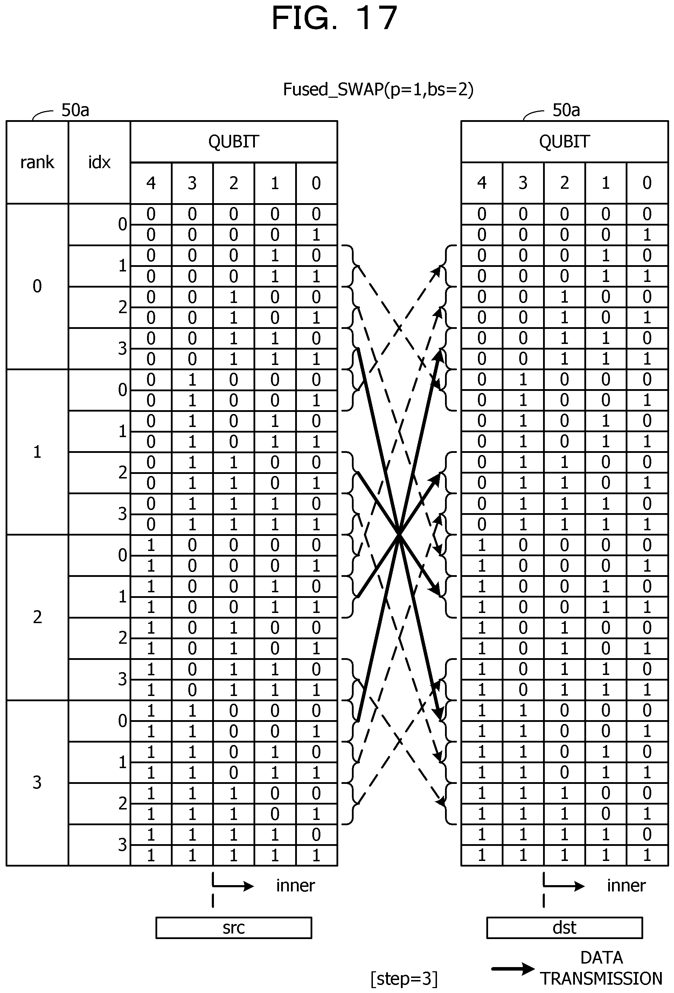

FIG. 17 is a diagram (3/3) illustrating an example of the transmission procedure of the state data between the calculation nodes by Fused_SWAP. In FIG. 17, transmission of a data block in a third step (step = 3) is indicated by a thick arrow.

Each calculation node performs transmission of the state data in units of data blocks as illustrated in FIGs. 15 to 17. Each calculation node may autonomously obtain which data block is transmitted to which calculation node by a predetermined calculation expression without exchanging information with another calculation node.

For example, each calculation node obtains the number of steps of the transmission processing to be implemented by an expression "2^{bs} - 1". Furthermore, the calculation node obtains a communication partner of a "step"th step by the following expression. my_rank^(step<<(tag1-inner_qb)

In this expression, "^" indicates an exclusive OR between bits. "<<" indicates a left shift of a bit. "step<<(tag1-inner_qb)" means that a bit string of "step" is shifted to the left by the number of "tag1-inner_qb". "my_rank" is a "rank" of the calculation node that transmits a data block. "tag1" is a smallest qubit number among qubit numbers of qubits to be operated by a quantum gate in need of SWAP. In the examples of FIGs. 15 to 17, "tag1 = 3" is satisfied. Furthermore, in the examples of FIGs. 15 to 17, "inner qb = 3" is satisfied.

Moreover, the calculation node calculates an index value of a data block to be transmitted at the "step"th step by the following expression.
((tag1-inne_qb)>>my_rank) ^step
">>" is a right shift of a bit. "tag1-inner_qb)>>my_rank" means that a bit string of "my_rank" is shifted to the right by the number of "tag1-inner_qb".

For example, in the case of "step = 2 (second step)" and "rank = 1", a transmission partner of a data block is a calculation node of "rank = 3", and the data block to be transmitted is a data block of "idx = 3" (see FIG. 16).

In this manner, each calculation node may autonomously specify a data block of a partner of a SWAP pair by the predetermined calculation expression. Then, the calculation nodes having the respective data blocks of the SWAP pair transmit the data blocks in the same step, so that each calculation node may receive the data block of the partner side of the SWAP pair with a buffer having small capacity.

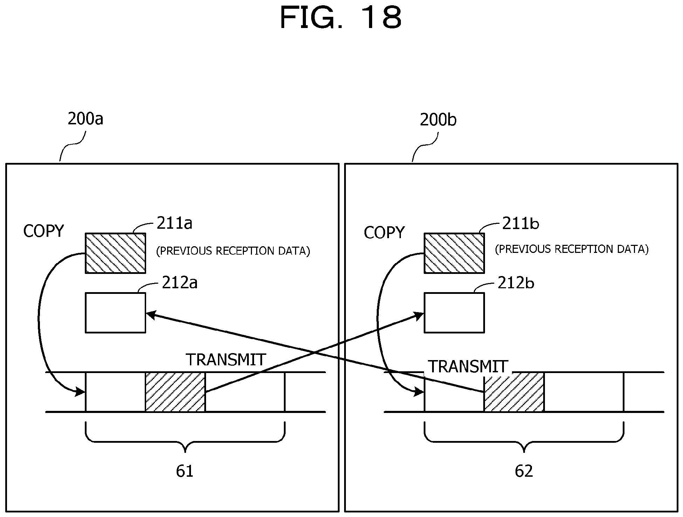

FIG. 18 is a diagram illustrating an example of a data transmission/reception method by a SWAP pair. For example, it is assumed that a data block 61 stored in the calculation node 200a and a data block 62 stored in the calculation node 200b configure a SWAP pair. The calculation node 200a is provided with buffers 211a and 212a having a double buffer configuration. The calculation node 200b is also provided with buffers 211b and 212b having a double buffer configuration. Capacity of each of the buffers 211a, 212a, 211b, and 212b is the same.

The calculation node 200a transmits data of a predetermined data length (sizes of the buffers 211b and 212b) from a head of the data block 61 to the calculation node 200b. For example, data transmitted first is stored in the buffer 211b, and data transmitted next is stored in the buffer 212b. Similarly, the calculation node 200b transmits data of a predetermined data length (sizes of the buffers 211a and 212a) from a head of the data block 62 to the calculation node 200a. For example, data transmitted first is stored in the buffer 211a, and data transmitted next is stored in the buffer 212a.

While transmitting the second data, the calculation node 200a copies previous reception data stored in the buffer 211a to the head of the data block 61. Similarly, while transmitting the second data, the calculation node 200b copies previous reception data stored in the buffer 211b to the head of the data block 62.

In this manner, by transmitting and receiving the data blocks 61 and 62 of the SWAP pair, capacity of a buffer prepared in each of the calculation nodes 200a and 200b may be reduced. For example, in a case where each calculation node transmits a data block without considering the SWAP pair, a buffer for transmission and a buffer for reception are prepared in each of the calculation nodes 200a, 200b, .... These buffers are needed to have capacity enough to store all data blocks to be transmitted and received in Fused_SWAP. When storage capacity of the memory is greatly consumed in the buffer, the number of qubits for which quantum calculation may be performed in the simulation decreases.

On the other hand, when the data blocks are transmitted and received as illustrated in FIG. 18 in consideration of the SWAP pair, data in an area where the received data is to be stored has already been transmitted, and the received data may be immediately written in an object data block. It is sufficient that a buffer size may secure a sufficient amount in terms of bandwidth. Since buffer capacity used for Fused_SWAP is small, the memory may be effectively used, and the number of qubits for which quantum calculation may be performed increases.

Furthermore, by performing transfer by scatter/gather via the buffer, even in a case where data to be transmitted is stored at a discontinuous position, efficient data transfer may be performed.

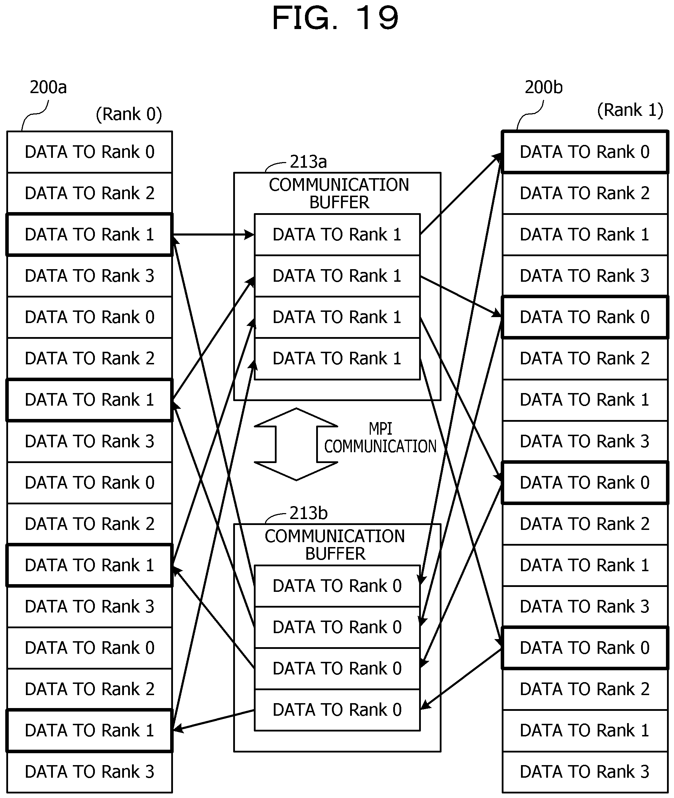

FIG. 19 is a diagram illustrating an example of data transmission by scatter/gather. For example, it is assumed that data blocks of a SWAP pair are mutually transmitted between the calculation node 200a and the calculation node 200b. The calculation node 200a stores data in the data block to be transmitted to the calculation node 200b in a discontinuous area of the memory. The calculation node 200b also stores data in the data block to be transmitted to the calculation node 200a in a discontinuous area of the memory.

At this time, the calculation node 200a stores the data to be transmitted to the calculation node 200b in a continuous area in a communication buffer 213a, and continuously transmits the stored data from the communication buffer 213a to the calculation node 200b. Similarly, the calculation node 200b stores the data to be transmitted to the calculation node 200a in a continuous area in a communication buffer 213b, and continuously transmits the stored data from the communication buffer 213b to the calculation node 200a. For example, the data of the communication buffer 213a and the data of the communication buffer 213b are mutually transferred by a message passing interface (MPI).

The data transmitted from the communication buffer 213a to the calculation node 200b is stored in a distributed manner at positions of the object data in the calculation node 200b. Similarly, the data transmitted from the communication buffer 213b to the calculation node 200a is stored in a distributed manner at positions of the object data in the calculation node 200a.

In this manner, by performing data transfer by scatter/gather, the number of times of communication may be reduced. As a result, communication efficiency improves.

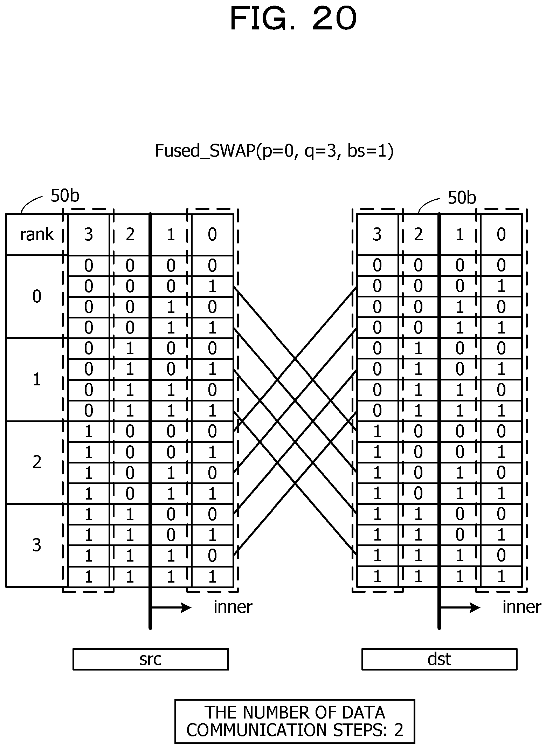

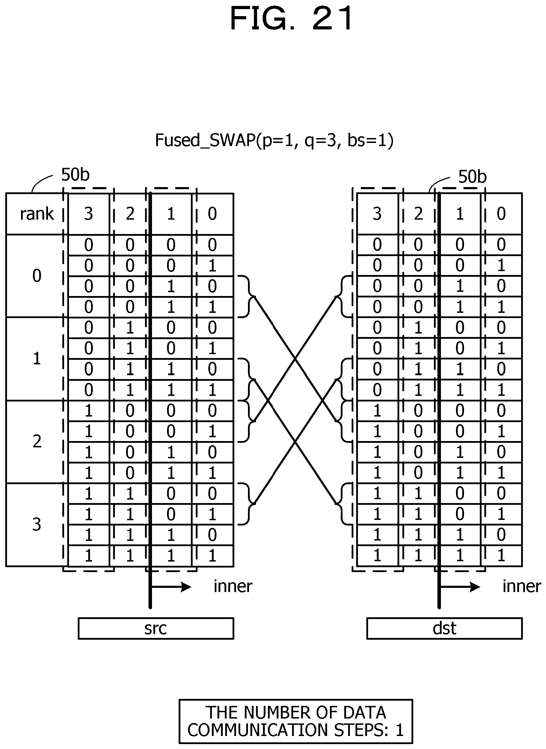

Furthermore, the number of pieces of state data included in a data block transmitted in data transmission in one step in Fused SWAP is determined by an inner-side qubit number. Specifically, it is determined by a difference between "inner_qb" (the number of inner qubits) and "p + bs". Therefore, it is also possible to reduce the number of times of data communication by how to select an inner-side qubit number to be subjected to SWAP in Fused_SWAP. Hereinafter, an appropriate method of selecting an inner-side qubit number will be described with reference to FIGs. 20 and 21.

FIG. 20 is a diagram illustrating an example of Fused_SWAP in a case where a small value is selected as the inner-side qubit number. In FIG. 20, a state address table 50b in a case where the number of pieces of state data stored in one calculation node is four is illustrated. Additionally, addresses of "src" and "dst" in the case of Fused_SWAP (p = 0, q = 3, bs = 1) are coupled by lines.

In this example, "inner_bp = 2", "p = 0", and "bs = 1" are satisfied. Thus, a difference between "inner_qb" and "p + bs" is "1". In this case, addresses of state data to be transmitted are discontinuous, and state data is transmitted to a calculation node as a transmission partner one by one. Therefore, the number of steps of data communication is "2".

FIG. 21 is a diagram illustrating an example of Fused_SWAP in a case where a large value is selected as the inner-side qubit number. In FIG. 21, addresses of "src" and "dst" in the case of Fused_SWAP (p = 1, q = 3, bs = 1) are coupled by lines. In this example, "inner_bp = 2", "p = 1", and "bs = 1" are satisfied. Thus, a difference between "inner_qb" and "p + bs" is "2". In this case, addresses of state data to be transmitted are continuous two by two, and the state data may be collected into a data block including the two pieces of state data and transmitted to a calculation node as a transmission partner. Therefore, the number of steps of data communication is "1".

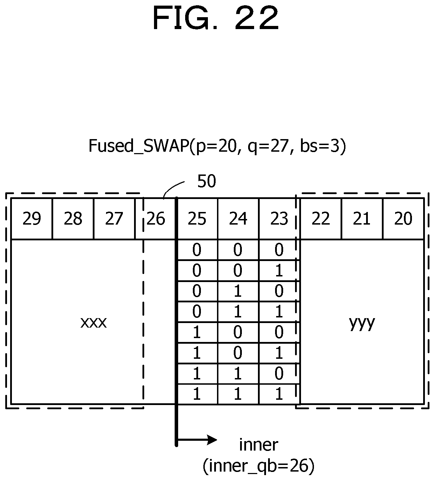

FIG. 22 is a diagram for describing a reason why the number of times of data communication increases by selecting the inner-side qubit number from a smaller value. As illustrated in FIG. 22, in the case of Fused_SWAP (p = 20, q = 27, bs = 3), there is a difference of three qubits between inner_qb and an inner-side qubit. Even in the case of the addresses in which a bit string lower than the qubit number "22" and a bit string of the qubit number "26" or more are common, combinations are present by the number (2^{k}) corresponding to the number of bits k (k is a natural number) of the difference between inner qb and the inner-side qubit. Then, an offset of 2^{k} occurs between the addresses of the state data to be subjected to SWAP. As a result, it is difficult to collectively transmit a large number of pieces of state data into one data block.

Efficiency of data communication is better when the number of data blocks is as small as possible. In other words, data communication is more efficient when data in continuous areas is set as SWAP objects than when data communication is performed by setting intermittent areas as SWAP objects. Thus, it is appropriate to select a qubit having a qubit number as high as possible as the inner-side qubit in Fused_SWAP.

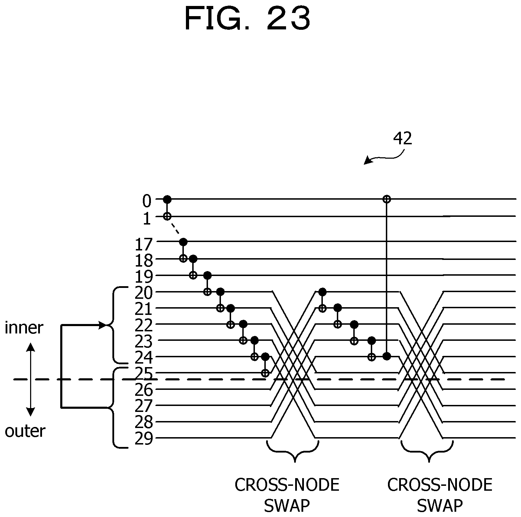

FIG. 23 is a diagram illustrating an example of the quantum circuit after optimization in a case where the inner-side qubit number is selected. As illustrated in FIG. 23, the quantum circuit optimization unit 130 specifies a qubit having a qubit number as large as possible as an inner-side qubit to be subjected to SWAP. In the quantum circuit 42 illustrated in FIG. 23, a qubit not subjected to SWAP is not sandwiched between outer-side qubits to be subjected to SWAP and inner-side qubits to be subjected to SWAP. Therefore, it is possible to efficiently perform data transfer in which a plurality of pieces of state data is collected into one data block.

The number of qubits to be swapped depends on the number of outer-side qubits. Thus, a head qubit number "p" of the inner-side qubit is determined in consideration of the number of outer-side qubits. Note that a qubit having the qubit number "25" is the inner-side qubit, but is used in a cross-node CNOT gate (it is inappropriate to SWAP with the outer-side qubit). Thus, the qubit having the qubit number "25" is included in an object to be subjected to SWAP with another inner-side qubit together with the outer-side qubit in Fused_SWAP.

In a case where Fused_SWAP is inserted into the quantum circuit 42, the quantum circuit optimization unit 130 changes original specification of a qubit to be subjected to a gate operation. For example, in the case of CNOT (25, 26) immediately after the first Fused_SWAP, it is changed to CNOT (20, 21). With this configuration, each calculation node may perform calculation corresponding to a CNOT gate using locally held state data.

After changing the operation on the outer-side qubit to the operation on the inner-side qubit and implementing the operation, the quantum circuit optimization unit 130 inserts the same operation of Fused_SWAP as the first Fused_SWAP into the quantum circuit 42. By executing Fused_SWAP twice, it is possible to return the state of the state data so that the quantum circuit 41 before optimization and a measurement result may be obtained.

Furthermore, selection of a communication pair (two calculation nodes that mutually perform data transmission to partners) for each communication step as illustrated in FIGs. 15 to 17 is appropriately obtained even when the selection is more complicated. For example, the communication pair may be calculated by a bipartite graph.

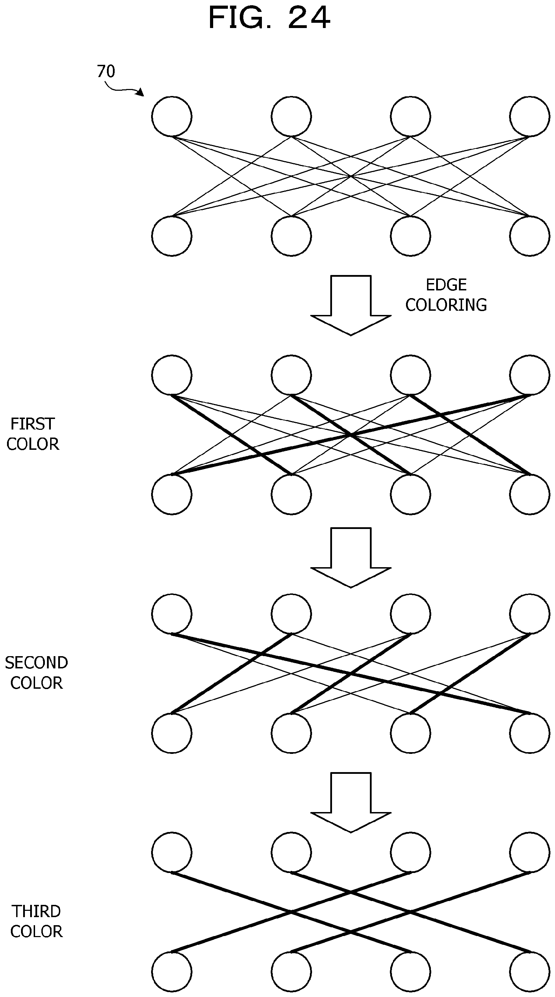

FIG. 24 is a diagram illustrating an example of a calculation principle of the communication pair by the bipartite graph. For example, in a case where the number of calculation nodes that perform quantum gate simulation is four, a communication pair is obtained by a bipartite graph 70 including two node sets each including four nodes (white circles in FIG. 24). The four nodes in the node set of the bipartite graph 70 correspond to calculation nodes. Additionally, in the bipartite graph 70, the nodes corresponding to the calculation nodes in which data communication is performed by Fused_SWAP are coupled by edges (lines coupling the nodes).

Here, by performing edge coloring of the bipartite graph 70, a communication pair for each communication step is obtained. The edge coloring of the bipartite graph 70 is processing of obtaining, in the bipartite graph 70 of the node set of N nodes (N is a natural number) and the node set of N nodes, combinations in which each node has one edge in a case where each node has k edges. It is known that k patterns of coloring may be always performed in the edge coloring of the bipartite graph 70.

In the edge coloring, for example, combinations in which each node has one edge of the bipartite graph 70 are searched for, and the corresponding combinations are colored. Next, after the colored edges are excluded, the remaining edges are colored again. By repeating this k times, k patterns of coloring are performed. In the example of FIG. 24, colored edges are indicated by thick lines. Since each node of the bipartite graph 70 has three edges, coloring is performed in three colors.

By treating communication corresponding to edges colored with the same color in the edge coloring as communication executed in the same communication step, the problem of the combination of the communication partner may be solved. Note that, when it is more efficient that each calculation node communicates with a plurality of calculation nodes in one communication step, data communication according to color patterns in a plurality of colors may be executed in parallel.

Next, exception handling of an inner-side qubit and an outer-side qubit of Fused_SWAP will be described.

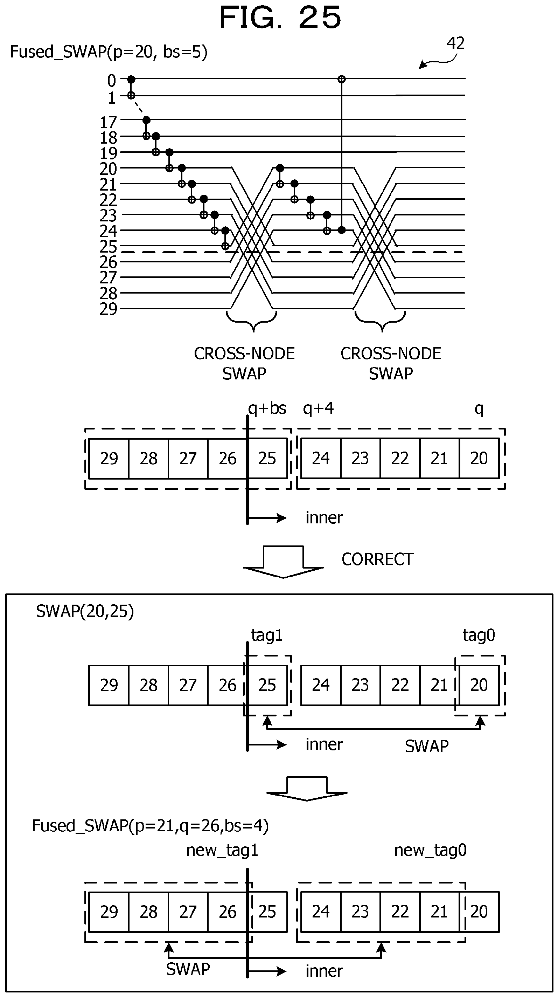

FIG. 25 is a diagram illustrating a first example of the exception handling of Fused_SWAP. Communication occurs in Fused_SWAP in a case where a qubit number of a qubit to be subjected to a gate operation exceeds a specific value. The specific value is a qubit number in a range in which quantum calculation may be performed in a calculation node, and is given as "inner_qb".

In the quantum circuit 42, the number of qubits is "30", and "inner_qb = 26" is satisfied. Additionally, the quantum circuit 42 includes a cross-node SWAP by insertion of Fused_SWAP (p = 20, bs = 5) .

In this case, SWAP integrated into Fused_SWAP (p = 20, bs = 5) includes SWAP (20, 25). This SWAP operation is an operation that is closed in one calculation node. Communication within a calculation node is about 100 times faster than communication between calculation nodes. On the other hand, in the processing of Fused_SWAP, it is inefficient to determine SWAP in a calculation node and SWAP between calculation nodes and also consider presence or absence of MPI communication. Thus, in a case where Fused_SWAP includes SWAP in a calculation node, the quantum circuit optimization unit 130 may perform exception handling such that all objects to be subjected to Fused_SWAP form inner-outer pairs.

For example, the quantum circuit optimization unit 130 optimizes inner-inner SWAP so as to be implemented before Fused_SWAP. In the example of FIG. 25, SWAP (20, 25) is executed before Fused_SWAP.

The quantum circuit optimization unit 130 moves a qubit number of an object to be subjected to the processing of Fused_SWAP by an amount of the inner-inner SWAP to be implemented earlier. A value of "bs" is subtracted by an amount of the movement of the qubit number. In the example of FIG. 25, a function of Fused SWAP (p = 20, bs = 5) is changed to Fused_SWAP (p = 21, q = 26, bs = 4).

When such exception handling is performed, there is an advantage that calculation may be performed with all the objects of Fused_SWAP as inner-outer pairs although an empty space may be created (a qubit not subjected to SWAP is sandwiched) between the inner side and the outer side of Fused_SWAP. In contrast, in a case where an order of "inner_qb" is low, an outer-outer SWAP operation may be performed before Fused_SWAP.

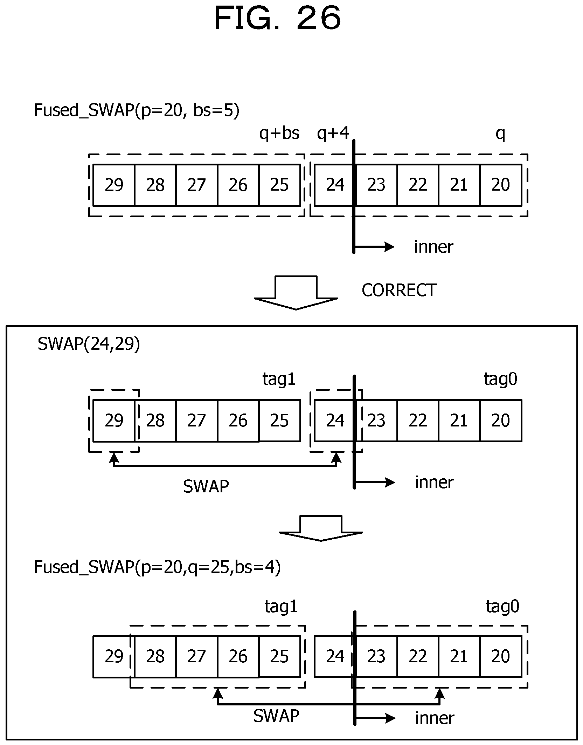

FIG. 26 is a diagram illustrating a second example of the exception handling of Fused_SWAP. In the example of FIG. 26, "inner qb = 24" is satisfied. At this time, when a Fused_SWAP (p = 20, bs = 5) operation is performed, an outer-side qubit having the qubit number "24" is included in an inner-side object to be subjected to SWAP. In this case, a function of Fused_SWAP may be changed such that SWAP (24, 29) is implemented before Fused_SWAP, and all inner-outer SWAP of Fused_SWAP may be set. Fused_SWAP becomes Fused_SWAP (p = 20, q = 25, bs = 4). In a case where outer-outer SWAP is extracted, it is unnecessary to move a head qubit number of an object to be subjected to the processing in Fused_SWAP.

Next, a processing procedure of quantum gate simulation by a quantum circuit to which Fused_SWAP is applied will be described in detail.

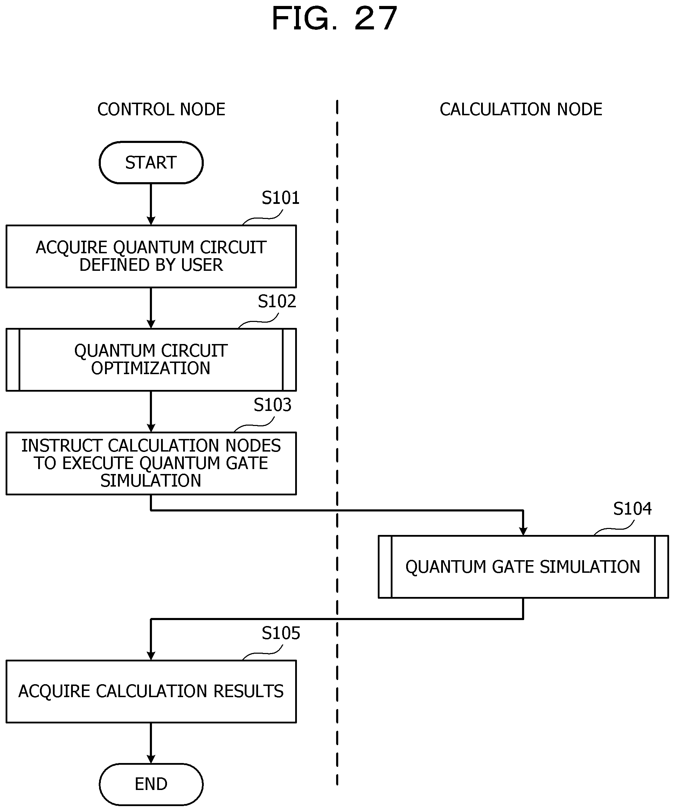

FIG. 27 is a flowchart illustrating an example of the processing procedure of the quantum gate simulation by the quantum circuit to which Fused_SWAP is applied. Hereinafter, the processing illustrated in FIG. 27 will be described along step numbers.

[Step S101] The simulation instruction unit 120 of the control node 100 acquires a quantum circuit defined by a user. For example, the simulation instruction unit 120 acquires data of a quantum circuit created by the user from the terminal 31. Furthermore, the simulation instruction unit 120 may generate a quantum circuit according to an input from the user via the terminal 31. The simulation instruction unit 120 stores the acquired quantum circuit in the storage unit 110.

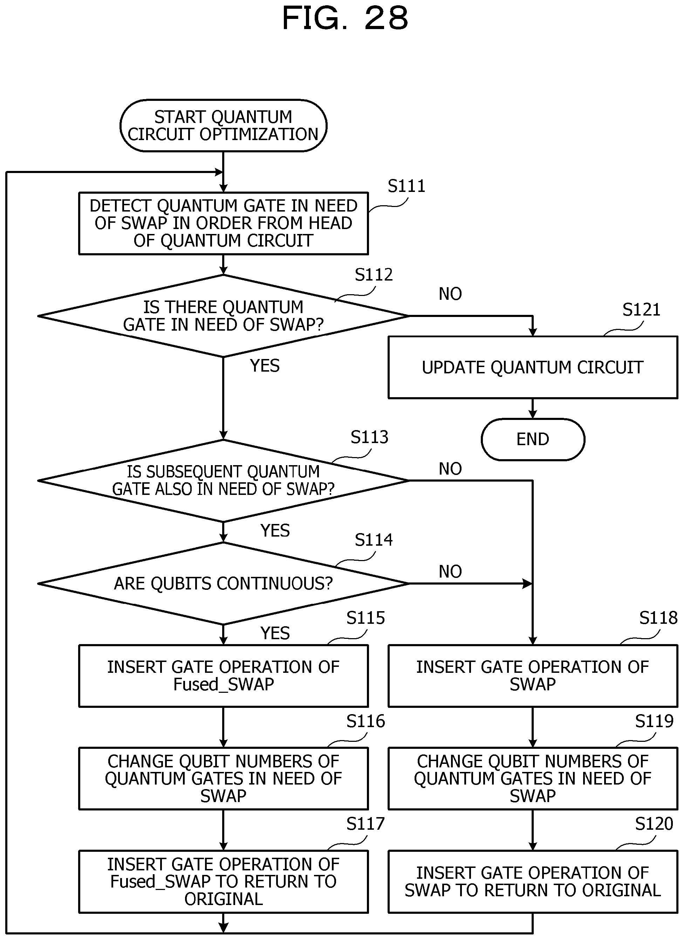

[Step S102] The simulation instruction unit 120 instructs the quantum circuit optimization unit 130 to optimize the acquired quantum circuit. The quantum circuit optimization unit 130 optimizes the quantum circuit using Fused_SWAP so that a cross-node gate operation becomes an intra-node gate operation. The quantum circuit optimization unit 130 updates a quantum circuit in the storage unit 110 by the optimized quantum circuit. Details of a processing procedure of the quantum circuit optimization by the quantum circuit optimization unit 130 will be described later (see FIG. 28).

[Step S103] The simulation instruction unit 120 transmits the quantum circuit after the optimization and a quantum calculation simulation program by the quantum circuit to the plurality of calculation nodes 200a, 200b, ..., and instructs the calculation nodes 200a, 200b, ... to execute the quantum gate simulation. At this time, the simulation instruction unit 120 transmits the simulation program including a program for processing a function of Fused_SWAP to each calculation node.

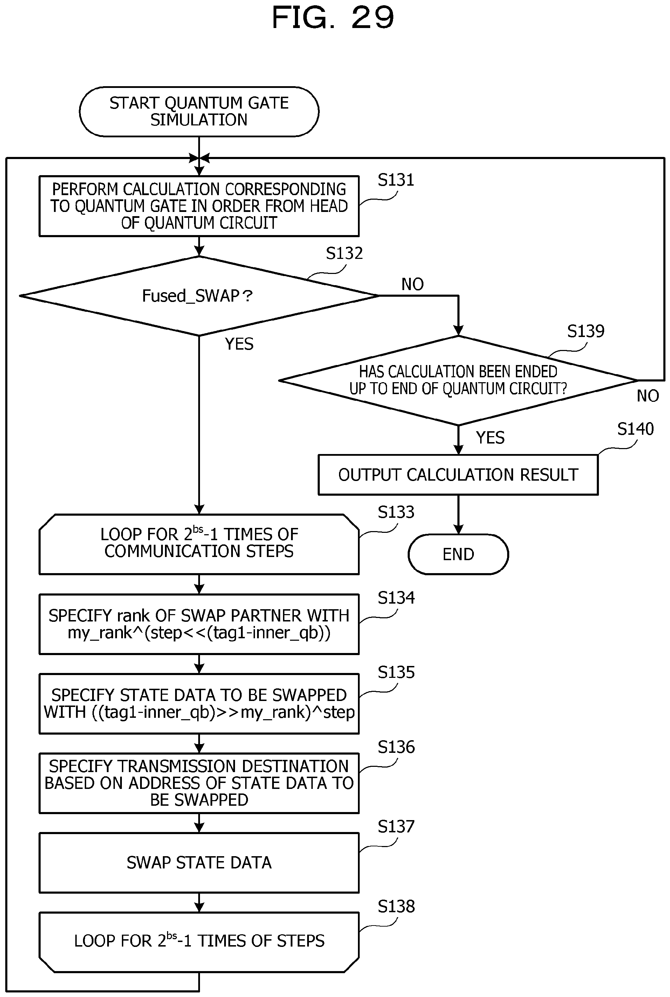

[Step S104] Each of the calculation nodes 200a, 200b, ... executes the quantum gate simulation. Details of processing of the quantum gate simulation will be described later (see FIG. 29).

[Step S105] The simulation instruction unit 120 acquires calculation results of the quantum gate simulation from the calculation nodes 200a, 200b, .... The calculation result is, for example, an array of states (|0> or |1>) of the respective qubits measured with a highest probability after quantum calculation is executed based on the quantum circuit. The simulation instruction unit 120 outputs the acquired calculation results.

Next, the quantum circuit optimization processing will be described in detail.

FIG. 28 is a flowchart illustrating an example of a procedure of the quantum circuit optimization processing. Hereinafter, the processing illustrated in FIG. 28 will be described along step numbers.

[Step S111] The quantum circuit optimization unit 130 reads the quantum circuit from the storage unit 110, and detects a quantum gate in need of SWAP in order from a head of the quantum circuit. The quantum gate in need of SWAP is, for example, a quantum gate in which at least a part of qubits to be operated are outer-side qubits.

[Step S112] The quantum circuit optimization unit 130 determines whether or not a quantum gate in need of SWAP is detected. In a case where a quantum gate in need of SWAP is detected, the quantum circuit optimization unit 130 advances the processing to step S113. Furthermore, in a case where a quantum gate in need of SWAP is not detected, the quantum circuit optimization unit 130 advances the processing to step S121.

[Step S113] The quantum circuit optimization unit 130 determines whether or not a quantum gate subsequent to the quantum gate in need of SWAP is also in need of SWAP. In the case of in need of SWAP, the quantum circuit optimization unit 130 advances the processing to step S114. Furthermore, in the case of in no need of SWAP, the quantum circuit optimization unit 130 advances the processing to step S118.

[Step S114] The quantum circuit optimization unit 130 determines whether or not qubits to be operated by the continuous quantum gates in need of SWAP are continuous. For example, the quantum circuit optimization unit 130 determines that the qubits are continuous when qubit numbers of the respective control qubits are continuous and qubit numbers of the respective target qubits are continuous in the continuous quantum gates in need of SWAP. In a case where the qubits are continuous, the quantum circuit optimization unit 130 advances the processing to step S115. Furthermore, in a case where the qubits are discontinuous, the quantum circuit optimization unit 130 advances the processing to step S118.

[Step S115] The quantum circuit optimization unit 130 inserts a gate operation of Fused SWAP corresponding to the continuous quantum gates in need of SWAP before the quantum gates in the quantum circuit. At this time, inner-side qubits having the largest possible qubit numbers are selected as qubits as SWAP destinations of the states of the qubits to be operated by the quantum gates in need of SWAP.

[Step S116] The quantum circuit optimization unit 130 changes the qubit numbers of the operation objects of the quantum gates in need of SWAP to qubit numbers of SWAP partners by Fused_SWAP.

[Step S117] In order to return order of the qubits to original order, the quantum circuit optimization unit 130 inserts the same gate operation of Fused_SWAP as in step S115 after the quantum gates in need of SWAP. Thereafter, the quantum circuit optimization unit 130 advances the processing to step Sill.

[Step S118] The quantum circuit optimization unit 130 inserts a gate operation of SWAP corresponding to the quantum gates in need of SWAP before the quantum gates in the quantum circuit. For example, in a case where the operation objects of the quantum gates in need of SWAP are two outer-side qubits having discontinuous qubit numbers, the SWAP gate that performs SWAP with an inner-side qubit is inserted for each qubit. Note that, when the qubits as the operation objects of the continuous gates in need of SWAP are the same, it is sufficient that the SWAP gate that performs SWAP of continuously operated outer-side qubits with inner-side qubits is inserted before the continuous gates in need of SWAP.

[Step S119] The quantum circuit optimization unit 130 changes the qubit numbers of the operation objects of the quantum gates in need of SWAP to qubit numbers of SWAP partners.
[Step S120] In order to return order of the qubits to original order, the quantum circuit optimization unit 130 inserts the same gate operation of SWAP as in step S118 after the quantum gates in need of SWAP. Thereafter, the quantum circuit optimization unit 130 advances the processing to step Sill.

[Step S121] The quantum circuit optimization unit 130 updates the quantum circuit in the storage unit 110 by the corrected quantum circuit.

In this manner, the quantum circuit without the cross-node gate other than the SWAP gate is generated.

FIG. 29 is a flowchart illustrating an example of a processing procedure of the quantum gate simulation. Hereinafter, assuming that the simulation unit 210a of the calculation node 200a executes the processing, the processing illustrated in FIG. 29 will be described along step numbers.

[Step S131] The simulation unit 210a calculates a change in the states of the qubits corresponding to the quantum gate in order from the head of the quantum circuit.
[Step S132] The simulation unit 210a determines whether or not to execute Fused_SWAP next. In the case of Fused SWAP, the simulation unit 210a advances the processing to step S133. Furthermore, in the case of not Fused_SWAP, the simulation unit 210a advances the processing to step S139.

[Step S133] The simulation unit 210a executes processing of steps S134 to S138 for 2^{bs}-1 times of communication steps.
[Step S134] The simulation unit 210a specifies a rank of a swap partner of state data in a current communication step according to a predetermined calculation expression. For example, the simulation unit 210a sets a rank of its own calculation node 200a to "my_rank". Furthermore, the simulation unit 210a sets how many communication steps have been performed including the current communication step as "step". Moreover, the simulation unit 210a sets the number of inner-side qubits to "inner_qb". Furthermore, the simulation unit 210a sets a smallest qubit number among the qubit numbers of the qubits to be operated by the quantum gates in need of SWAP as "tag1". For example, in a case where Fused_SWAP (p, q, bs) is executed, a value of q is "tag1". Furthermore, in a case where Fused SWAP (p, q, bs) is executed, a value of "p + bs" is "tag1". Additionally, the simulation unit 210a calculates "my_rank^ (step<<(tag1-inner_qb)", and sets a calculation result as a rank of a calculation node as the transmission partner.

[Step S135] The simulation unit 210a specifies state data to be swapped with a predetermined calculation expression. For example, the simulation unit 210a calculates "((tag1-inner_qb)>>my_rank) ^step", and sets state data corresponding to an index (idx) indicated by a calculation result as the state data to be swapped.

[Step S136] The simulation unit 210a specifies an address of the transmission destination of the state data based on an address of the state data to be swapped. For example, the simulation unit 210a sets, as the address of the transmission destination, an address obtained by exchanging two partial bit strings of bs pieces specified by Fused_SWAP from the address (bit string) of the state data to be swapped.

[Step S137] The simulation unit 210a implements swap of the state data with a process corresponding to the rank of the swap partner (a process of executing a simulation unit of another calculation node).

[Step S138] When the processing of steps S134 to S138 is completed for the 2^{bs}-1 times of communication steps, the simulation unit 210a advances the processing to step S131.

[Step S139] The simulation unit 210a determines whether or not calculation corresponding to the quantum gate has been ended up to an end of the quantum circuit. In the case of not being ended, the simulation unit 210a advances the processing to step S131. Furthermore, in the case of being ended, the simulation unit 210a advances the processing to step S140.

[Step S140] The simulation unit 210a outputs a calculation result corresponding to the quantum circuit.

In this manner, calculation efficiency of the quantum gate simulation by the classical computer based on the quantum circuit may be improved. In other words, by inserting the quantum gate of the cross-node SWAP before the various quantum gates of the cross-node gate operation, the subsequent calculation of the gate operation may be executed without communication between the calculation nodes. Therefore, the calculation of the gate operation may be efficiently performed.

For example, a case is assumed where a plurality of quantum gates performing operations on outer-side qubits, which are the cross-node gate operations, is continuous, and qubit numbers operated by the quantum gates are "a" and "b" and are common. In this case, by inserting one SWAP gate that performs SWAP of the qubits having the qubit numbers "a" and "b" with inner-side qubits before the quantum gates, it is possible to implement calculation of the operations of the plurality of quantum gates without communication between the calculation nodes.

Moreover, in a case where the qubits of the continuous quantum gates in need of SWAP are continuous, data transfer for SWAP may be efficiently performed by using Fused_SWAP. For example, it is assumed that the number of pieces of state data held by one calculation node is M (M is a natural number) . In a case where normal SWAP is repeated, since SWAP moves state data in which XOR of specified qubits is "1" as an object, in one SWAP, data of an amount of M/2 of the state data is transferred to each calculation node. Then, in a case where the number of qubits to be subjected to SWAP is N (N is a natural number), the number of pieces of data of (M/2) × N is transferred. Considering calculation complexity with N, an amount of calculation is O(N) in order notation.

In Fused_SWAP, XOR non-zero data of two bit strings (for example, [p:p+N] and [q:q+N]) in each of which N bits are arranged is moved as an object (bs = N is satisfied because N times of SWAP are performed). The number of pieces of data to be moved by Fused_SWAP is M(1 - (1/2)^{N}). Considering calculation complexity with N, an amount of calculation is O(1) in order notation. In other words, an execution time of Fused_SWAP hardly changes even when a plurality of times of SWAP is integrated.

Since the plurality of times of SWAP may be collectively executed by Fused_SWAP in this manner, a processing time of SWAP inserted to reduce the number of cross-node gates from the quantum circuit may be shortened. Then, by reducing the number of cross-node gates, a time needed for the quantum gate simulation of the entire quantum circuit is shortened.

### [Other Embodiments]

In the second embodiment, the optimization of the quantum circuit is implemented at the control node 100, but the optimization of the quantum circuit may be executed at any one of the calculation nodes 200a, 200b, .... For example, one of the plurality of calculation nodes that performs the simulation may be set as a main calculation node, and the main calculation node may optimize the quantum circuit and transmit the optimized quantum circuit to another calculation node.

The above description merely indicates a principle of the present invention. Moreover, numerous modifications and variations may be made by those skilled in the art, and the present invention is not limited to the above-described or illustrated exact configuration and application example, and all corresponding modifications and equivalents are regarded to fall within the scope of the present invention by appended claims and equivalents thereof.

### REFERENCE SIGNS LIST

- 1a, 1b,: Calculation node
- 2: First quantum circuit
- 3: Second quantum circuit
- 4: First quantum gate
- 5: Second quantum gate
- 6: Third quantum gate
- 7: First qubit
- 8: Second qubit
- 9: Third qubit
- 10: Information processing device
- 11: Storage unit
- 12: Processing unit

## Claims

1. An information processing program for causing a computer to execute processing comprising:
acquiring a first quantum circuit to be simulated by a plurality of calculation nodes that performs simulation of quantum calculation;
detecting a first quantum gate that includes, as an operation object, a first qubit that causes transmission and reception of state data for each combination of states of a respective plurality of qubits indicated in the first quantum circuit between the plurality of calculation nodes at a time of operation in a case where storage destinations of the state data are allocated to the plurality of calculation nodes based on qubit numbers of qubits to be operated by a quantum gate included in the first quantum circuit;
inserting, before the first quantum gate of the first quantum circuit, a second quantum gate that indicates a swap operation between a state of a second qubit to be operated by the first quantum gate and a state of a third qubit that is operatable without the transmission and reception of the state data between the plurality of calculation nodes; and
changing the operation object of the first quantum gate from the second qubit to the third qubit.

2. The information processing program according to claim 1, wherein,
in the processing of inserting the second quantum gate,
in a case where qubit numbers of a respective plurality of the second qubits to be operated by any one of the continuously detected first quantum gates are continuous, a final transmission destination of transmission object state data to be transmitted in a case where the swap operation that corresponds to each of the continuously detected first quantum gates is continuously performed is determined, and a function that instructs the plurality of calculation nodes to transmit the transmission object state data to the determined transmission destination is inserted before the continuously detected first quantum gates as the second quantum gate.

3. The information processing program according to claim 1 or 2, wherein,
in the processing of detecting the first quantum gate,
in a case where it is determined that, in the state data for each combination of the states, a bit string which indicates the states of the plurality of qubits and in which a value that indicates a state of a qubit that has a smaller qubit number is allocated to a lower bit is associated as an address, and it is determined that state data groups that have the addresses in which a predetermined number of values of first bits from a top are common are stored in the same calculation node, a quantum gate that has a qubit that corresponds to any one of the first bits of the address as an operation object is detected as the first quantum gate.

4. The information processing program according to claim 3, wherein,
in the processing of inserting the second quantum gate, a qubit that corresponds to any one of lower second bits other than the first bits of the address is selected as the third qubit.

5. The information processing program according to claim 4, wherein,
in the processing of inserting the second quantum gate, continuous qubits that have larger qubit numbers except for the second qubits among the qubits that correspond to any of the second bits of the address are selected as the third qubits.

6. The information processing program according to any one of claims 1 to 5, further causing the computer to execute processing of
inserting, after the first quantum gate of the first quantum circuit, a third quantum gate that indicates the same swap operation as the second quantum gate.

7. The information processing program according to claim 2, further causing the computer to execute processing comprising:
storing in a distributed manner the state data for each combination of states in the plurality of calculation nodes;
causing the plurality of calculation nodes to execute simulation according to a second quantum circuit after insertion of the second quantum gate; and
causing, in a case where the plurality of calculation nodes executes the second quantum gate, each of the plurality of calculation nodes to execute processing of specifying, as a transmission destination, a second address indicated by a second bit string obtained by swapping a first partial bit string that corresponds to the second qubits and a second partial bit string that corresponds to the third qubits in a first bit string of a first address of the transmission object state data, and transmitting the transmission object state data.

8. The information processing program according to claim 7, further causing the computer to execute processing of,
in the processing of causing each of the plurality of calculation nodes to execute the processing of transmitting the transmission object state data,
dividing, in a case where there is a plurality of calculation nodes of a partner to which each of the plurality of calculation nodes transmits the transmission object state data at a time of execution of the second quantum gate, transmission processing of the transmission object state data into a plurality of communication steps, and in the same communication step, causing a first calculation node to execute processing of specifying a fourth address as a transmission destination and transmitting first transmission object state data of a third address to a second calculation node, and causing the second calculation node to execute processing of specifying the third address as a transmission destination and transmitting second transmission object state data of the fourth address to the first calculation node.

9. An information processing method for causing a computer to execute processing comprising:
acquiring a first quantum circuit to be simulated by a plurality of calculation nodes that performs simulation of quantum calculation;
detecting a first quantum gate that includes, as an operation object, a first qubit that causes transmission and reception of state data for each combination of states of a respective plurality of qubits indicated in the first quantum circuit between the plurality of calculation nodes at a time of operation in a case where storage destinations of the state data are allocated to the plurality of calculation nodes based on qubit numbers of qubits to be operated by a quantum gate included in the first quantum circuit;
inserting, before the first quantum gate of the first quantum circuit, a second quantum gate that indicates a swap operation between a state of a second qubit to be operated by the first quantum gate and a state of a third qubit that is operatable without the transmission and reception of the state data between the plurality of calculation nodes; and
changing the operation object of the first quantum gate from the second qubit to the third qubit.

10. An information processing device comprising:
a processing unit configured to:
acquire a first quantum circuit to be simulated by a plurality of calculation nodes that performs simulation of quantum calculation;
detect a first quantum gate that includes, as an operation object, a first qubit that causes transmission and reception of state data for each combination of states of a respective plurality of qubits indicated in the first quantum circuit between the plurality of calculation nodes at a time of operation in a case where storage destinations of the state data are allocated to the plurality of calculation nodes based on qubit numbers of qubits to be operated by a quantum gate included in the first quantum circuit;
insert, before the first quantum gate of the first quantum circuit, a second quantum gate that indicates a swap operation between a state of a second qubit to be operated by the first quantum gate and a state of a third qubit that is operatable without the transmission and reception of the state data between the plurality of calculation nodes; and
change the operation object of the first quantum gate from the second qubit to the third qubit.
